# EUROPEAN PATENT APPLICATION

(11) **EP 4 148 643 A1**
(43) Date of publication of application: **15.03.2023**
(21) Application number: 22169580.2
(22) Date of filing: 22.04.2022
(51) Int. Cl.: G06Q 20/12, G06Q 20/36

(54) **NON-FUNGIBLE-TOKEN-BASED COMMERCE ATTRIBUTE**

(30) Priority: 14.09.2021 US 202117475240
(71) Applicant: Shopify Inc., Ottawa, ON K2P 2L8 (CA)
(72) Inventor: MATHESON, Lucas, Ontario, K2P 2L8 (CA); LEE, John Jong-Suk, Ontario, K2P 2L8 (CA)
(74) Representative: Murgitroyd & Company

(57) **Abstract**

Embodiments described herein provide for an ecommerce platform implementing blockchain technologies for tracking, managing, and predicting purchasing behavior. The blockchain mints NFTs representing various aspects and data values of a purchase, such as a ticket NFT, a certificate of authenticity NFT, and an access privilege NFT. The NFTs are assigned to customer wallets and later referenced to track and predict purchasing behaviors. The merchant server later references the blockchain wallet to provide incentives or rewards to customers having certain NFTs. A customer may sell the ticket NFT to another party, but keep the access privilege NFT. The merchant server grants the customer access to limited edition products or events because the customer's wallet includes the access privilege NFT.

## Description

### TECHNICAL FIELD

This application generally relates to non-fungible tokens (NFTs), and, more particularly, to systems and methods for managing and tracking purchase transactions on an ecommerce platform using blockchain technology and NFTs.

### BACKGROUND

Ecommerce systems often attempt to derive information about customers using the customers' purchase transaction history. Conventional solutions may, for example, aim to utilize the customer purchase history to predict future purchases.

### BRIEF DESCRIPTION OF THE DRAWINGS

The present disclosure can be better understood by referring to the following figures. The components in the figures are not necessarily to scale, emphasis instead being placed upon illustrating the principles of the disclosure. In the figures, reference numerals designate corresponding parts throughout the different views.
**FIG. 1** illustrates an e-commerce platform, according to an embodiment.
**FIG. 2** depicts an embodiment for a home page of an administrator, according to an embodiment.
**FIG. 3A** shows components of a system, according to an embodiment.
**FIG. 3B** shows a blockchain implemented by the system, according to an embodiment.
**FIG. 4** shows execution steps of a method performed by an ecommerce platform server, according to an embodiment.

### SUMMARY

Accordingly there is provided a computer-implemented method, a system, a computer program, and a computer storage medium as detailed in the claims that follow.

### DETAILED DESCRIPTION

Reference will now be made to the illustrative embodiments illustrated in the drawings, and specific language will be used here to describe the same. It will nevertheless be understood that no limitation of the scope of the claims or this disclosure is thereby intended. Alterations and further modifications of the inventive features illustrated herein, and additional applications of the principles of the subject matter illustrated herein, which would occur to one ordinarily skilled in the relevant art and having possession of this disclosure, are to be considered within the scope of the subject matter disclosed herein. The present disclosure is here described in detail with reference to embodiments illustrated in the drawings, which form a part here. Other embodiments may be used and/or other changes may be made without departing from the spirit or scope of the present disclosure. The illustrative embodiments described in the detailed description are not meant to be limiting of the subject matter presented here.

Conventional ecommerce platforms suffer from challenges to the capabilities of making accurate predictions and determining whether the purchases were legitimate purchases. In one example, it may be challenging to sort through thousands of purchase data records to identify relevant purchases indicative of a future purchase. In another example, when a customer purchases a ticket from a scalper at an event, that customer has not utilized an authorized channel of purchase. The customer may not hold a legitimate ticket or may not be entitled to certain benefits. As a result, any information about that customer is either not captured or inaccurate, though the customer may appear to be a legitimate ticketholder by possessing a ticket stub.

Embodiments described herein provide for an ecommerce platform implementing blockchain technologies for tracking, managing, and predicting purchasing behavior. The blockchain mints NFTs representing various aspects and data values of a purchase, such as a ticket NFT, a certificate of authenticity NFT, and an access privilege NFT. The NFTs are assigned to customer wallets and later referenced to track and predict purchasing behaviors. The merchant server later references the blockchain wallet to provide incentives or rewards to customers having certain NFTs. A customer may sell the ticket NFT to another party, but keep the access privilege NFT. The merchant server grants the customer access to limited edition products or events because the customer's wallet has been assigned (or "contains") the access privilege NFT.

Described herein are systems and methods for generating and distributing purchase transaction information and tracking related information about customers and merchants, using one or more aspects of distributed ledger technology, including blockchains and non-fungible tokens (NFTs). The unique NFTs include data that merchants can use to uniquely identify customers and provide limited-access features, rewards, and incentives. The unique nature of the NFTs and the transaction data captured by the blockchain also provides a source of information about customers and merchants to derive customer purchasing behavior patterns and merchant product trends and public interest.

The NFTs utilize distributed ledger or blockchain technology to offer potential tracking and incentive functionality for merchants, particularly with respect to products or services that are unique or quasi-unique, such as event tickets. A customer purchases the particular product from a merchant's online store during a purchase transaction process (sometimes called a "purchase event," "transactions associated with one or more blockchain tokens," or "transactions associated with one or more NFTs"). Before, after, or upon the purchase event, an ecommerce platform server or a merchant server mints (generates and issues) a set of one or more NFTs on a blockchain. The NFTs may represent various aspects of the purchased product and/or metadata associated with purchase transaction, such as information about the customer, the merchant, and the devices, among others. The ecommerce platform may support a variety of types of blockchain and protocols, and thus each customer could have one or more blockchain wallets, which may operate on different blockchains. The platform server stores the NFTs into the customer's wallet for the particular blockchain program used to generate the NFTs. The platform server may also generate transaction blocks on the blockchain representing a record of the transaction itself. The platform server may refer to the NFTs to derive various types of knowledge about the customers or the merchants, such as tracking purchasing behavior patterns of customers or product trends, predict future purchases to present targeted offers, offer certain purchasing opportunities to customers, or establish a provenance platform (e.g., provide certificates of authenticity), among other potential benefits.

Any number of computing devices (e.g., merchant device, customer device, platform service) may participate as nodes of the blockchain and may perform any of the various blockchain update processes mentioned herein, though the embodiments described here centralize many of the blockchain-related functions to the platform server or the merchant server for ease of description. In operation, the platform server or merchant server may mint the set of NFTs representing aspects of the purchased product and related transaction information, for example, as generated or captured during the purchase transaction. The platform server or customer device stores the NFTs into one of the blockchain wallets of the customer, which may be stored in a memory location of the ecommerce platform (e.g., platform server, platform database) or of the customer (e.g., customer device disk memory). An NFT may include, for example, metadata associated with the purchase transaction, media data (e.g., image file, audio file), text file, application-specific file, or pointers (e.g., links, access rights) to a storage location containing some or all of the types of data represented by the particular NFT.

The merchant can provide certain benefits, functions, or features to reward or incentivize customers engaging with the merchant's online store. Processes executed by the platform server or the merchant server may enable certain privileges or offers to the customer, such as granting access to particular products, bypassing a checkout queue, granting access to priority merchant resources, discounts, or access to online or offline experiences (commerce or otherwise), among others. The merchant server can provide controlled or limited content webpages to customers who possess a certain NFT or collection of NFTs. At some later time, when the customer returns to the merchant's online store (or another merchant's online store), the merchant server detects the customer's unique identifier (UID) and requests further information or data about the customer from the platform server, including a query instructing the platform server to search the contents of the one or more blockchain wallets associated with the particular customer UID. For example, the customer's UID may include a wallet address or other form of Public Blockchain Address based on a confirmation of wallet ownership, which may be in the form of a customer's login attempt and/or user credentials or a confirmatory action on the blockchain (e.g., node consensus). The ecommerce system automatically determines the set of NFTs available on that wallet and determines whether the customer may have access to the controlled content according to one or more access parameters or access rights as indicated, and required, by the merchant rules. Additionally or alternatively, the ecommerce system may associate a priority status to the customer's activity on the merchant's online store, according to the merchant's rules. For instance, if the customer has an NFT representing a particular ticket stub or an NFT representing a certificate of authenticity, then the merchant server grants the customer access to a controlled webpage presenting souvenirs products for the ticketed event and/or grants the customer prioritized purchasing transactions for souvenir products for the ticketed event.

The platform server or merchant server may also access the NFTs to determine customer purchasing behavior patterns and identify similar products available through the online merchant store (or any other online merchant store of the ecommerce platform). The platform server or merchant server may reference the customer's purchase history stored in the platform database, blockchain blocks, or NFTs to track and identify customer purchasing behaviors. For example, the platform server may cross-reference the NFTs of prior events (e.g., tickets, receipts, downloaded albums) to derive information (e.g., venue, genre, pricing, artist) to identify and suggest purchases (e.g., concert events) of interest. The platform server may more easily predict a future event of interest for a customer based upon those NFTs already in possession by the customer.

The platform server may execute smart contracts to hold NFTs in abeyance to bridge, import, or exchange various types of NFTs between the various parties of the ecommerce system. In some cases, the platform server may execute smart contracts to function as a bridge or escrow party that temporarily holds and stores NFTs while processing certain transactions. By taking temporary custody over the NFTs during certain restricted activities or transactions (sometimes referred to as a "restricted session"), the ecommerce platform may provide confidence that the NFT is unique, trustworthy, and distinctly owned by one particular customer, thereby inhibiting certain forms of fraudulent activities, such as sharing the NFTs among multiple UIDs. When the customer accesses restricted controlled content or features of the merchant website, the platform server may determine that the wallet associated with the UID contains the NFTs required for the restricted features. The platform server or the merchant server may execute the corresponding smart contract of the blockchain associated with the NFT or the type of transaction, instructing the platform server to store the NFTs in memory and/or update the blockchain or other database. The platform server may store the NFTs until certain criteria of the smart contract are satisfied (e.g., customer logs off merchant website), at which time the programming of the smart contract instructs the platform server to automatically transfer custody over the NFTs back to the customer wallet. The smart contracts may also address any problems originating from implementing a variety of blockchain technologies. As such, a beneficial function of the system would include eased interoperability and sophisticated rules engine capable of handling the different types of blockchain technologies employed by the merchants.

### ILLUSTRATIVE COMMERCE PLATFORM

In some embodiments, the methods disclosed herein may be performed on or in association with a commerce platform, such as an ecommerce platform. Therefore, an example of a commerce platform will be described by way of introduction.

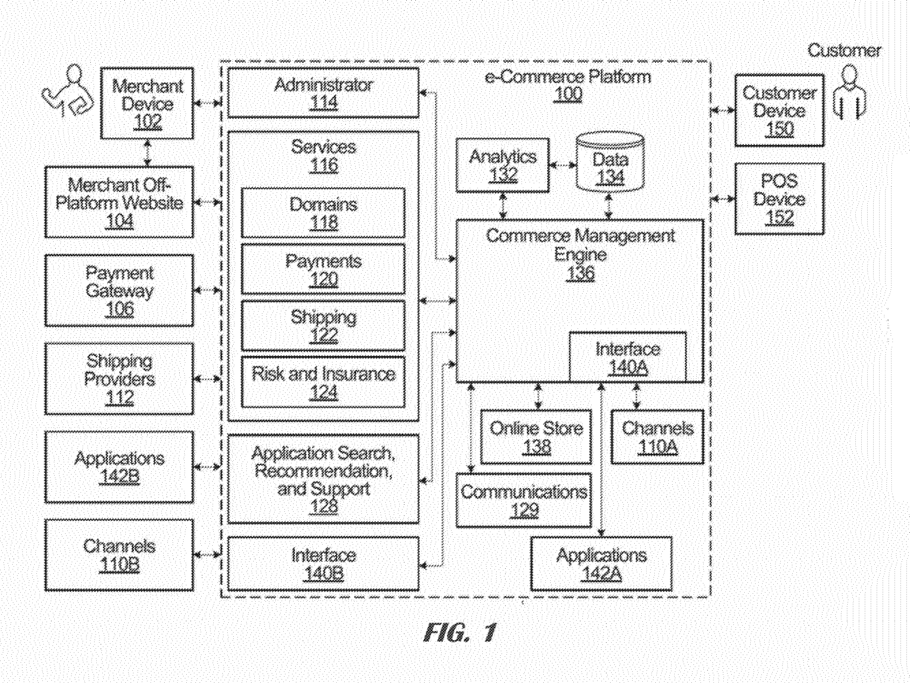

**FIG. 1** illustrates an ecommerce platform **100**, according to one embodiment. The ecommerce platform **100** may be used to provide merchant products and services to customers. While the disclosure contemplates using the apparatus, system, and process to purchase products and services, for simplicity the description herein will refer to products. All references to products throughout this disclosure should also be understood to be references to products and/or services, including physical products, digital content, tickets, subscriptions, services to be provided, and the like.

While the disclosure throughout contemplates that a 'merchant' and a 'customer' may be more than individuals, for simplicity the description herein may generally refer to merchants and customers as such. Embodiments of the ecommerce platform 100, the customer, or the merchant may include a personalized or customized platform, distinct from or parallel to the ecommerce platform **100**. For example, a merchant (e.g., automotive mechanic shop) offering products and/or services may implement a blockchain to track supply chain transactions, product sales, and service sales. The blockchain implementation may mint and issue NFTs to customers based on the products or services sold, which the vendor's platform may track and review to provide the potential privileges or other features described herein. All references to merchants and customers throughout this disclosure should also be understood to be references to groups of individuals, companies, corporations, computing entities, and the like, and may represent for-profit or not-for-profit exchange of products. Further, while the disclosure throughout refers to 'merchants' and 'customers', and describes their roles as such, the ecommerce platform **100** should be understood to more generally support users in an ecommerce environment, and all references to merchants and customers throughout this disclosure should also be understood to be references to users, such as where a user is a merchant-user (e.g., a seller, retailer, wholesaler, or provider of products), a customer-user (e.g., a buyer, purchase agent, or user of products), a prospective user (e.g., a user browsing and not yet committed to a purchase, a user evaluating the ecommerce platform **100** for potential use in marketing and selling products, and the like), a service provider user (e.g., a shipping provider **112**, a financial provider, and the like), a company or corporate user (e.g., a company representative for purchase, sales, or use of products; an enterprise user; a customer relations or customer management agent, and the like), an information technology user, a computing entity user (e.g., a computing bot for purchase, sales, or use of products), and the like.

The ecommerce platform **100** may provide a centralized system for providing merchants with online resources and facilities for managing their business. The facilities described herein may be deployed in part or in whole through a machine that executes computer software, modules, program codes, and/or instructions on one or more processors, which may be part of or external to the ecommerce platform **100**. Merchants may utilize the ecommerce platform **100** for managing commerce with customers, such as by implementing an ecommerce experience with customers through an online store **138**, through channels **110A-B**, through POS devices **152** in physical locations (e.g., a physical storefront or other location such as through a kiosk, terminal, reader, printer, 3D printer, and the like), by managing their business through the ecommerce platform **100**, and by interacting with customers through a communications facility **129** of the ecommerce platform **100**, or any combination thereof. A merchant may utilize the ecommerce platform **100** as a sole commerce presence with customers, or in conjunction with other merchant commerce facilities, such as through a physical store (e.g., 'brick-and-mortar' retail stores), a merchant off-platform website **104** (e.g., a commerce Internet website or other internet or web property or asset supported by or on behalf of the merchant separately from the ecommerce platform), and the like. However, even these 'other' merchant commerce facilities may be incorporated into the ecommerce platform, such as where POS devices **152** in a physical store of a merchant are linked into the ecommerce platform **100**, where a merchant off-platform website **104** is tied into the ecommerce platform **100**, such as through 'buy buttons' that link content from the merchant off platform website **104** to the online store **138**, and the like.

The online store **138** may represent a multitenant facility comprising a plurality of virtual storefronts. In embodiments, merchants may manage one or more storefronts in the online store **138**, such as through a merchant device **102** (e.g., computer, laptop computer, mobile computing device, and the like), and offer products to customers through a number of different channels **110A-B** (e.g., an online store **138**; a physical storefront through a POS device **152**; electronic marketplace, through an electronic buy button integrated into a website or social media channel such as on a social network, social media page, social media messaging system; and the like). A merchant may sell across channels **110A-B** and then manage their sales through the ecommerce platform **100**, where channels **110A** may be provided internal to the ecommerce platform **100** or from outside the ecommerce channel **110B**. A merchant may sell in their physical retail store, at pop ups, through wholesale, over the phone, and the like, and then manage their sales through the ecommerce platform **100**. A merchant may employ all or any combination of these, such as maintaining a business through a physical storefront utilizing POS devices **152**, maintaining a virtual storefront through the online store **138**, and utilizing a communication facility **129** to leverage customer interactions and analytics **132** to improve the probability of sales. Throughout this disclosure the terms online store **138** and storefront may be used synonymously to refer to a merchant's online ecommerce offering presence through the ecommerce platform **100**, where an online store **138** may refer to the multitenant collection of storefronts supported by the ecommerce platform **100** (e.g., for a plurality of merchants) or to an individual merchant's storefront (e.g., a merchant's online store).

In some embodiments, a customer may interact through a customer device **150** (e.g., computer, laptop computer, mobile computing device, and the like), a POS device **152** (e.g., retail device, a kiosk, an automated checkout system, and the like), or any other commerce interface device known in the art. The ecommerce platform **100** may enable merchants to reach customers through the online store **138**, through POS devices **152** in physical locations (e.g., a merchant's storefront or elsewhere), to promote commerce with customers through dialog via electronic communication facility **129**, and the like, providing a system for reaching customers and facilitating merchant services for the real or virtual pathways available for reaching and interacting with customers.

In some embodiments, and as described further herein, the ecommerce platform **100** may be implemented through a processing facility including a processor and a memory, the processing facility storing a set of instructions that, when executed, cause the ecommerce platform **100** to perform the ecommerce and support functions as described herein. The processing facility may be part of a server, client, network infrastructure, mobile computing platform, cloud computing platform, stationary computing platform, or other computing platform, and provide electronic connectivity and communications between and amongst the electronic components of the ecommerce platform **100**, merchant devices **102**, payment gateways **106**, application developers, channels **110A-B,** shipping providers **112**, customer devices **150**, point of sale devices **152**, and the like. The ecommerce platform **100** may be implemented as a cloud computing service, a software as a service (SaaS), infrastructure as a service (IaaS), platform as a service (PaaS), desktop as a Service (DaaS), managed software as a service (MSaaS), mobile backend as a service (MBaaS), information technology management as a service (ITMaaS), and the like, such as in a software and delivery model in which software is licensed on a subscription basis and centrally hosted (e.g., accessed by users using a client

(for example, a thin client) via a web browser or other application, accessed through by POS devices, and the like). In some embodiments, elements of the ecommerce platform **100** may be implemented to operate on various platforms and operating systems, such as iOS, Android, on the web, and the like (e.g., the administrator **114** being implemented in multiple instances for a given online store for iOS, Android, and for the web, each with similar functionality).

In some embodiments, the online store **138** may be served to a customer device **150** through a webpage provided by a server of the ecommerce platform **100**. The server may receive a request for the webpage from a browser or other application installed on the customer device **150**, where the browser (or other application) connects to the server through an IP Address, the IP address obtained by translating a domain name. In return, the server sends back the requested webpage. Webpages may be written in or include Hypertext Markup Language (HTML), template language, JavaScript, and the like, or any combination thereof. For instance, HTML is a computer language that describes static information for the webpage, such as the layout, format, and content of the webpage. Website designers and developers may use the template language to build webpages that combine static content, which is the same on multiple pages, and dynamic content, which changes from one page to the next. A template language may make it possible to re-use the static elements that define the layout of a webpage, while dynamically populating the page with data from an online store. The static elements may be written in HTML, and the dynamic elements written in the template language. The template language elements in a file may act as placeholders, such that the code in the file is compiled and sent to the customer device **150** and then the template language is replaced by data from the online store **138**, such as when a theme is installed. The template and themes may consider tags, objects, and filters. The client device web browser (or other application) then renders the page accordingly.

In some embodiments, online stores **138** may be served by the ecommerce platform **100** to customers, where customers can browse and purchase the various products available (e.g., add them to a cart, purchase immediately through a buy-button, and the like). Online stores **138** may be served to customers in a transparent fashion without customers necessarily being aware that it is being provided through the ecommerce platform **100** (rather than directly from the merchant). Merchants may use a merchant configurable domain name, a customizable HTML theme, and the like, to customize their online store **138**. Merchants may customize the look and feel of their website through a theme system, such as where merchants can select and change the look and feel of their online store **138** by changing their theme while having the same underlying product and business data shown within the online store's product hierarchy. Themes may be further customized through a theme editor, a design interface that enables users to customize their website's design with flexibility. Themes may also be customized using theme-specific settings that change aspects, such as specific colors, fonts, and pre-built layout schemes. The online store may implement a content management system for website content. Merchants may author blog posts or static pages and publish them to their online store **138**, such as through blogs, articles, and the like, as well as configure navigation menus. Merchants may upload images (e.g., for products), video, content, data, and the like to the ecommerce platform **100**, such as for storage by the system (e.g., as data **134**). In some embodiments, the ecommerce platform **100** may provide functions for resizing images, associating an image with a product, adding and associating text with an image, adding an image for a new product variant, protecting images, and the like.

As described herein, the ecommerce platform **100** may provide merchants with transactional facilities for products through a number of different channels **110A-B**, including the online store **138**, over the telephone, as well as through physical POS devices **152** as described herein. The ecommerce platform **100** may include business support services **116**, an administrator **114**, and the like associated with running an on-line business, such as providing a domain service **118** associated with their online store, payment services **120** for facilitating transactions with a customer, shipping services **122** for providing customer shipping options for purchased products, risk and insurance services **124** associated with product protection and liability, merchant billing, and the like. Services **116** may be provided via the ecommerce platform **100** or in association with external facilities, such as through a payment gateway **106** for payment processing, shipping providers **112** for expediting the shipment of products, and the like.

In some embodiments, the ecommerce platform **100** may provide for integrated shipping services **122** (e.g., through an ecommerce platform shipping facility or through a third-party shipping carrier), such as providing merchants with real-time updates, tracking, automatic rate calculation, bulk order preparation, label printing, and the like.

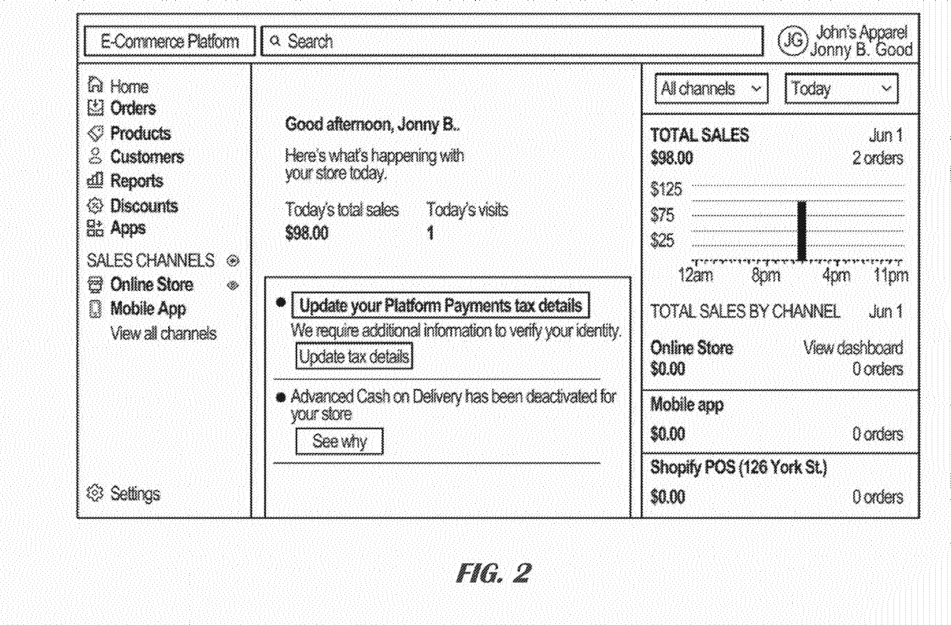

**FIG. 2** depicts a non-limiting embodiment for a home page of an administrator **114**, which may show information about daily tasks, a store's recent activity, and the next steps a merchant can take to build their business. In some embodiments, a merchant may log in to administrator **114** via a merchant device **102** such as from a desktop computer or mobile device, and manage aspects of their online store **138**, such as viewing the online store's **138** recent activity, updating the online store's **138** catalog, managing orders, recent visits activity, total orders activity, and the like. In some embodiments, the merchant may be able to access the different sections of administrator **114** by using the sidebar, such as shown on **FIG. 2****.** Sections of the administrator **114** may include various interfaces for accessing and managing core aspects of a merchant's business, including orders, products, customers, available reports, and discounts. The administrator **114** may also include interfaces for managing sales channels for a store including the online store, mobile application(s) made available to customers for accessing the store (Mobile App), POS devices, and/or a buy button. The administrator **114** may also include interfaces for managing applications (Apps) installed on the merchant's account; settings applied to a merchant's online store **138** and account. A merchant may use a search bar to find products, pages, or other information. Depending on the device **102** or software application the merchant is using, they may be enabled for different functionality through the administrator **114.** For instance, if a merchant logs in to the administrator **114** from a browser, they may be able to manage all aspects of their online store **138.** If the merchant logs in from their mobile device (e.g., via a mobile application), they may be able to view all or a subset of the aspects of their online store **138**, such as viewing the online store's **138** recent activity, updating the online store's **138** catalog, managing orders, and the like.

More detailed information about commerce and visitors to a merchant's online store **138** may be viewed through acquisition reports or metrics, such as displaying a sales summary for the merchant's overall business, specific sales and engagement data for active sales channels, and the like. Reports may include acquisition reports, behavior reports, customer reports, finance reports, marketing reports, sales reports, custom reports, and the like. The merchant may be able to view sales data for different channels **110A-B** from different periods of time (e.g., days, weeks, months, and the like), such as by using drop-down menus. An overview dashboard may be provided for a merchant that wants a more detailed view of the store's sales and engagement data. An activity feed in the home metrics section may be provided to illustrate an overview of the activity on the merchant's account. For example, by clicking on a 'view all recent activity' dashboard button, the merchant may be able to see a longer feed of recent activity on their account. A home page may show notifications about the merchant's online store **138**, such as based on account status, growth, recent customer activity, and the like. Notifications may be provided to assist a merchant with navigating through a process, such as capturing a payment, marking an order as fulfilled, archiving an order that is complete, and the like.

The ecommerce platform **100** may provide for a communications facility **129** and associated merchant interface for providing electronic communications and marketing, such as utilizing an electronic messaging aggregation facility for collecting and analyzing communication interactions between merchants, customers, merchant devices **102**, customer devices **150**, POS devices **152**, and the like, to aggregate and analyze the communications, such as for increasing the potential for providing a sale of a product, and the like. For instance, a customer may have a question related to a product, which may produce a dialog between the customer and the merchant (or automated processor-based agent representing the merchant), where the communications facility **129** analyzes the interaction and provides analysis to the merchant on how to improve the probability for a sale.

The ecommerce platform **100** may provide a financial facility **120** for secure financial transactions with customers, such as through a secure card server environment. The ecommerce platform **100** may store credit card information, such as in payment card industry data (PCI) environments (e.g., a card server), to reconcile financials, bill merchants, perform automated clearing house (ACH) transfers between an ecommerce platform **100** financial institution account and a merchant's bank account (e.g., when using capital), and the like. These systems may have Sarbanes-Oxley Act (SOX) compliance and a high level of diligence required in their development and operation. The financial facility **120** may also provide merchants with financial support, such as through the lending of capital (e.g., lending funds, cash advances, and the like) and provision of insurance. In addition, the ecommerce platform **100** may provide for a set of marketing and partner services and control the relationship between the ecommerce platform **100** and partners. They also may connect and onboard new merchants with the ecommerce platform **100.** These services may enable merchant growth by making it easier for merchants to work across the ecommerce platform **100.** Through these services, merchants may be provided help facilities via the ecommerce platform **100.**

In some embodiments, online store **138** may support a great number of independently administered storefronts and process a large volume of transactional data on a daily basis for a variety of products. Transactional data may include customer contact information, billing information, shipping information, information on products purchased, information on services rendered, and any other information associated with business through the ecommerce platform **100.** In some embodiments, the ecommerce platform **100** may store this data in a data facility **134.** The transactional data may be processed to produce analytics **132,** which in turn may be provided to merchants or third-party commerce entities, such as providing consumer trends, marketing and sales insights, recommendations for improving sales, evaluation of customer behaviors, marketing and sales modeling, trends in fraud, and the like, related to online commerce, and provided through dashboard interfaces, through reports, and the like. The ecommerce platform **100** may store information about business and merchant transactions, and the data facility **134** may have many ways of enhancing, contributing, refining, and extracting data, where over time the collected data may enable improvements to aspects of the ecommerce platform **100.**

Referring again to **FIG. 1****,** in some embodiments the ecommerce platform **100** may be configured with a commerce management engine **136** for content management, task automation and data management to enable support and services to the plurality of online stores **138** (e.g., related to products, inventory, customers, orders, collaboration, suppliers, reports, financials, risk and fraud, and the like), but be extensible through applications **142A-B** that enable greater flexibility and custom processes required for accommodating an ever-growing variety of merchant online stores, POS devices, products, and services, where applications **142A** may be provided internal to the ecommerce platform **100** or applications **142B** from outside the ecommerce platform **100.** In some embodiments, an application **142A** may be provided by the same party providing the platform **100** or by a different party. In some embodiments, an application **142B** may be provided by the same party providing the platform 100 or by a different party. The commerce management engine **136** may be configured for flexibility and scalability through portioning (e.g., sharding) of functions and data, such as by customer identifier, order identifier, online store identifier, and the like. The commerce management engine **136** may accommodate store-specific business logic and in some embodiments, may incorporate the administrator **114** and/or the online store **138.**

The commerce management engine **136** includes base or "core" functions of the ecommerce platform **100,** and as such, as described herein, not all functions supporting online stores **138** may be appropriate for inclusion. For instance, functions for inclusion into the commerce management engine **136** may need to exceed a core functionality threshold through which it may be determined that the function is core to a commerce experience (e.g., common to a majority of online store activity, such as across channels, administrator interfaces, merchant locations, industries, product types, and the like), is re-usable across online stores **138** (e.g., functions that can be re-used/modified across core functions), limited to the context of a single online store **138** at a time (e.g., implementing an online store 'isolation principle', where code should not be able to interact with multiple online stores **138** at a time, ensuring that online stores **138** cannot access each other's data), provide a transactional workload, and the like. Maintaining control of what functions are implemented may enable the commerce management engine **136** to remain responsive, as many required features are either served directly by the commerce management engine **136** or enabled through an interface **140A-B,** such as by its extension through an application programming interface (API) connection to applications **142A-B** and channels **110A-B,** where interfaces **140A** may be provided to applications **142A** and/or channels **110A** inside the ecommerce platform **100** or through interfaces **140B** provided to applications **142B** and/or channels **110B** outside the ecommerce platform 100. Generally, the platform **100** may include interfaces **140A-B** (which may be extensions, connectors, APIs, and the like) which facilitate connections to and communications with other platforms, systems, software, data sources, code and the like. Such interfaces **140A-B** may be an interface **140A** of the commerce management engine **136** or an interface **140B** of the platform **100** more generally. If care is not given to restricting functionality in the commerce management engine **136,** responsiveness could be compromised, such as through infrastructure degradation through slow databases or non-critical backend failures, through catastrophic infrastructure failure such as with a data center going offline, through new code being deployed that takes longer to execute than expected, and the like. To prevent or mitigate these situations, the commerce management engine **136** may be configured to maintain responsiveness, such as through configuration that utilizes timeouts, queues, back-pressure to prevent degradation, and the like.

Although isolating online store data is important to maintaining data privacy between online stores **138** and merchants, there may be reasons for collecting and using cross-store data, such as for example, with an order risk assessment system or a platform payment facility, both of which require information from multiple online stores **138** to perform well. In some embodiments, rather than violating the isolation principle, it may be preferred to move these components out of the commerce management engine **136** and into their own infrastructure within the ecommerce platform **100.**

In some embodiments, the ecommerce platform **100** may provide for a platform payment facility **120,** which is another example of a component that utilizes data from the commerce management engine **136** but may be located outside so as to not violate the isolation principle. The platform payment facility **120** may allow customers interacting with online stores **138** to have their payment information stored safely by the commerce management engine **136** such that they only have to enter it once. When a customer visits a different online store **138,** even if the customer has never been there before, the platform payment facility **120** may recall their information to enable a more rapid and correct check out. This may provide a cross-platform network effect, where the ecommerce platform **100** becomes more useful to its merchants as more merchants join, such as because there are more customers who checkout more often because of the ease of use with respect to customer purchases. To maximize the effect of this network, payment information for a given customer may be retrievable from an online store's checkout, allowing information to be made available globally across online stores **138.** It would be difficult and error prone for each online store **138** to be able to connect to any other online store **138** to retrieve the payment information stored there. As a result, the platform payment facility may be implemented external to the commerce management engine **136.**

For those functions that are not included within the commerce management engine **136,** applications **142A-B** provide a way to add features to the ecommerce platform **100.** Applications **142A-B** may be able to access and modify data on a merchant's online store **138,** perform tasks through the administrator **114,** create new flows for a merchant through a user interface (e.g., that is surfaced through extensions / API), and the like. Merchants may be enabled to discover and install applications **142A-B** through application search, recommendations, and support **128.** In some embodiments, core products, core extension points, applications, and the administrator **114** may be developed to work together. For instance, application extension points may be built inside the administrator **114** so that core features may be extended by way of applications, which may deliver functionality to a merchant through the extension.

In some embodiments, applications **142A-B** may deliver functionality to a merchant through the interface **140A-B,** such as where an application **142A-B** is able to surface transaction data to a merchant (e.g., App: "Engine, surface my app data in mobile and web admin using the embedded app SDK"), and/or where the commerce management engine **136** is able to ask the application to perform work on demand (Engine: "App, give me a local tax calculation for this checkout").

Applications **142A-B** may support online stores **138** and channels **110A-B,** provide for merchant support, integrate with other services, and the like. Where the commerce management engine **136** may provide the foundation of services to the online store **138,** the applications **142A-B** may provide a way for merchants to satisfy specific and sometimes unique needs. Different merchants will have different needs, and so may benefit from different applications **142A-B.** Applications **142A-B** may be better discovered through the ecommerce platform **100** through development of an application taxonomy (categories) that enable applications to be tagged according to a type of function it performs for a merchant; through application data services that support searching, ranking, and recommendation models; through application discovery interfaces such as an application store, home information cards, an application settings page; and the like.

Applications **142A-B** may be connected to the commerce management engine **136** through an interface **140A-B,** such as utilizing APIs to expose the functionality and data available through and within the commerce management engine **136** to the functionality of applications (e.g., through REST, GraphQL, and the like). For instance, the ecommerce platform 100 may provide API interfaces **140A-B** to merchant and partner-facing products and services, such as including application extensions, process flow services, developer-facing resources, and the like. With customers more frequently using mobile devices for shopping, applications **142A-B** related to mobile use may benefit from more extensive use of APIs to support the related growing commerce traffic. The flexibility offered through use of applications and APIs (e.g., as offered for application development) enable the ecommerce platform **100** to better accommodate new and unique needs of merchants (and internal developers through internal APIs) without requiring constant change to the commerce management engine **136,** thus providing merchants what they need when they need it. For instance, shipping services **122** may be integrated with the commerce management engine **136** through a shipping or carrier service API, thus enabling the ecommerce platform **100** to provide shipping service functionality without directly impacting code running in the commerce management engine **136.**

Many merchant problems may be solved by letting partners improve and extend merchant workflows through application development, such as problems associated with back-office operations (merchant-facing applications **142A-B**) and in the online store **138** (customer-facing applications **142A-B**). As a part of doing business, many merchants will use mobile and web related applications on a daily basis for back-office tasks (e.g., merchandising, inventory, discounts, fulfillment, and the like) and online store tasks (e.g., applications related to their online shop, for flash-sales, new product offerings, and the like), where applications **142A-B,** through extension / API **140A-B,** help make products easy to view and purchase in a fast growing marketplace. In some embodiments, partners, application developers, internal applications facilities, and the like, may be provided with a software development kit (SDK), such as through creating a frame within the administrator **114** that sandboxes an application interface. In some embodiments, the administrator **114** may not have control over nor be aware of what happens within the frame. The SDK may be used in conjunction with a user interface kit to produce interfaces that mimic the look and feel of the ecommerce platform **100,** such as acting as an extension of the commerce management engine **136.**

Applications **142A-B** that utilize APIs may pull data on demand, but often they also need to have data pushed when updates occur. Update events may be implemented in a subscription model, such as for example, customer creation, product changes, or order cancelation. Update events may provide merchants with needed updates with respect to a changed state of the commerce management engine **136,** such as for synchronizing a local database, notifying an external integration partner, and the like. Update events may enable this functionality without having to poll the commerce management engine **136** all the time to check for updates, such as through an update event subscription. In some embodiments, when a change related to an update event subscription occurs, the commerce management engine **136** may post a request, such as to a predefined callback URL. The body of this request may contain a new state of the object and a description of the action or event. Update event subscriptions may be created manually, in the administrator facility **114,** or automatically (e.g., via the API **140A-B**). In some embodiments, update events may be queued and processed asynchronously from a state change that triggered them, which may produce an update event notification that is not distributed in real-time.

In some embodiments, the ecommerce platform **100** may provide application search, recommendation and support **128.** Application search, recommendation and support **128** may include developer products and tools to aid in the development of applications, an application dashboard (e.g., to provide developers with a development interface, to administrators for management of applications, to merchants for customization of applications, and the like), facilities for installing and providing permissions with respect to providing access to an application **142A-B** (e.g., for public access, such as where criteria must be met before being installed, or for private use by a merchant), application searching to make it easy for a merchant to search for applications **142A-B** that satisfy a need for their online store **138,** application recommendations to provide merchants with suggestions on how they can improve the user experience through their online store **138,** a description of core application capabilities within the commerce management engine **136,** and the like. These support facilities may be utilized by application development performed by any entity, including the merchant developing their own application **142A-B,** a third-party developer developing an application **142A-B** (e.g., contracted by a merchant, developed on their own to offer to the public, contracted for use in association with the ecommerce platform **100,** and the like), or an application **142A** or **142B** being developed by internal personal resources associated with the ecommerce platform **100.** In some embodiments, applications **142A-B** may be assigned an application identifier (ID), such as for linking to an application (e.g., through an API), searching for an application, making application recommendations, and the like.

The commerce management engine **136** may include base functions of the ecommerce platform **100** and expose these functions through APIs **140A-B** to applications **142A-B.** The APIs **140A-B** may enable different types of applications built through application development. Applications **142A-B** may be capable of satisfying a great variety of needs for merchants but may be grouped roughly into three categories: customer-facing applications, merchant-facing applications, integration applications, and the like. Customer-facing applications **142A-B** may include online store **138** or channels **110A-B** that are places where merchants can list products and have them purchased (e.g., the online store, applications for flash sales (e.g., merchant products or from opportunistic sales opportunities from third-party sources), a mobile store application, a social media channel, an application for providing wholesale purchasing, and the like). Merchant-facing applications **142A-B** may include applications that allow the merchant to administer their online store **138** (e.g., through applications related to the web or website or to mobile devices), run their business (e.g., through applications related to POS devices), to grow their business (e.g., through applications related to shipping (e.g., drop shipping), use of automated agents, use of process flow development and improvements), and the like. Integration applications may include applications that provide useful integrations that participate in the running of a business, such as shipping providers **112** and payment gateways.

In some embodiments, an application developer may use an application proxy to fetch data from an outside location and display it on the page of an online store **138.** Content on these proxy pages may be dynamic, capable of being updated, and the like. Application proxies may be useful for displaying image galleries, statistics, custom forms, and other kinds of dynamic content. The core-application structure of the ecommerce platform **100** may allow for an increasing number of merchant experiences to be built in applications **142A-B** so that the commerce management engine **136** can remain focused on the more commonly utilized business logic of commerce.

The ecommerce platform **100** provides an online shopping experience through a curated system architecture that enables merchants to connect with customers in a flexible and transparent manner. A typical customer experience may be better understood through an embodiment example purchase workflow, where the customer browses the merchant's products on a channel **110A-B,** adds what they intend to buy to their cart, proceeds to checkout, and pays for the content of their cart resulting in the creation of an order for the merchant. The merchant may then review and fulfill (or cancel) the order. The product is then delivered to the customer. If the customer is not satisfied, they might return the products to the merchant.

In an example embodiment, a customer may browse a merchant's products on a channel **110A-B.** A channel **110A-B** is a place where customers can view and buy products. In some embodiments, channels **110A-B** may be modeled as applications **142A-B** (a possible exception being the online store **138,** which is integrated within the commence management engine **136**). A merchandising component may allow merchants to describe what they want to sell and where they sell it. The association between a product and a channel may be modeled as a product publication and accessed by channel applications, such as via a product listing API. A product may have many options, like size and color, and many variants that expand the available options into specific combinations of all the options, like the variant that is extra-small and green, or the variant that is size large and blue. Products may have at least one variant (e.g., a "default variant" is created for a product without any options). To facilitate browsing and management, products may be grouped into collections, provided product identifiers (e.g., stock keeping unit (SKU)) and the like. Collections of products may be built by either manually categorizing products into one (e.g., a custom collection), by building rulesets for automatic classification (e.g., a smart collection), and the like. Products may be viewed as 2D images, 3D images, rotating view images, through a virtual or augmented reality interface, and the like.

In some embodiments, the customer may add what they intend to buy to their cart (in an alternate embodiment, a product may be purchased directly, such as through a buy button as described herein). Customers may add product variants to their shopping cart. The shopping cart model may be channel specific. The online store **138** cart may be composed of multiple cart line items, where each cart line item tracks the quantity for a product variant. Merchants may use cart scripts to offer special promotions to customers based on the content of their cart. Since adding a product to a cart does not imply any commitment from the customer or the merchant, and the expected lifespan of a cart may be in the order of minutes (not days), carts may be persisted to an ephemeral data store.

The customer then proceeds to checkout. A checkout component may implement a web checkout as a customer-facing order creation process. A checkout API may be provided as a computer-facing order creation process used by some channel applications to create orders on behalf of customers (e.g., for point of sale). Checkouts may be created from a cart and record a customer's information, such as an email address, billing information, and shipping details. On checkout, the merchant commits to pricing. If the customer inputs their contact information but does not proceed to payment, the ecommerce platform **100** may provide an opportunity to re-engage the customer (e.g., in an abandoned checkout feature). For those reasons, checkouts can have much longer lifespans than carts (hours or even days) and are therefore persisted. Checkouts may calculate taxes and shipping costs based on the customer's shipping address. Checkout may delegate the calculation of taxes to a tax component and the calculation of shipping costs to a delivery component. A pricing component may enable merchants to create discount codes (e.g., 'secret' strings that when entered on the checkout apply new prices to the items in the checkout). Discounts may be used by merchants to attract customers and assess the performance of marketing campaigns. Discounts and other custom price systems may be implemented on top of the same platform piece, such as through price rules (e.g., a set of prerequisites that when met imply a set of entitlements). For instance, prerequisites may be items such as "the order subtotal is greater than $100" or "the shipping cost is under $10," and entitlements may be items such as "a 20% discount on the whole order" or "$10 off products X, Y, and Z."

Customers then pay for the content of their cart resulting in the creation of an order for the merchant. Channels **110A-B** may use the commerce management engine **136** to move money, currency or a store of value (such as dollars or a cryptocurrency) to and from customers and merchants. Communication with the various payment providers (e.g., online payment systems, mobile payment systems, digital wallet, credit card gateways, and the like) may be implemented within a payment processing component. The actual interactions with the payment gateways **106** may be provided through a card server environment. In some embodiments, the payment gateway **106** may accept international payment, such as integrating with leading international credit card processors. The card server environment may include a card server application, card sink, hosted fields, and the like. This environment may act as the secure gatekeeper of the sensitive credit card information. In some embodiments, most of the process may be orchestrated by a payment processing job. The commerce management engine **136** may support many other payment methods, such as through an offsite payment gateway **106** (e.g., where the customer is redirected to another website), manually (e.g., cash), online payment methods (e.g., online payment systems, mobile payment systems, digital wallet, credit card gateways, and the like), gift cards, and the like. At the end of the checkout process, an order is created. An order is a contract of sale between the merchant and the customer where the merchant agrees to provide the goods and services listed on the orders (e.g., order line items, shipping line items, and the like) and the customer agrees to provide payment (including taxes). This process may be modeled in a sales component. Channels **110A-B** that do not rely on commerce management engine **136** checkouts may use an order API to create orders. Once an order is created, an order confirmation notification may be sent to the customer and an order placed notification sent to the merchant via a notification component. Inventory may be reserved when a payment processing job starts to avoid over-selling (e.g., merchants may control this behavior from the inventory policy of each variant). Inventory reservation may have a short time span (minutes) and may need to be very fast and scalable to support flash sales (e.g., a discount or promotion offered for a short time, such as targeting impulse buying). The reservation is released if the payment fails. When the payment succeeds, and an order is created, the reservation is converted into a long-term inventory commitment allocated to a specific location. An inventory component may record where variants are stocked, and may track quantities for variants that have inventory tracking enabled. It may decouple product variants (a customer facing concept representing the template of a product listing) from inventory items (a merchant facing concept that represent an item whose quantity and location is managed). An inventory level component may keep track of quantities that are available for sale, committed to an order or incoming from an inventory transfer component (e.g., from a vendor).

The merchant may then review and fulfill (or cancel) the order. A review component may implement a business process merchant's use to ensure orders are suitable for fulfillment before actually fulfilling them. Orders may be fraudulent, require verification (e.g., ID checking), have a payment method which requires the merchant to wait to make sure they will receive their funds, and the like. Risks and recommendations may be persisted in an order risk model. Order risks may be generated from a fraud detection tool, submitted by a third-party through an order risk API, and the like. Before proceeding to fulfillment, the merchant may need to capture the payment information (e.g., credit card information) or wait to receive it (e.g., via a bank transfer, check, and the like) and mark the order as paid. The merchant may now prepare the products for delivery. In some embodiments, this business process may be implemented by a fulfillment component. The fulfillment component may group the line items of the order into a logical fulfillment unit of work based on an inventory location and fulfillment service. The merchant may review, adjust the unit of work, and trigger the relevant fulfillment services, such as through a manual fulfillment service (e.g., at merchant managed locations) used when the merchant picks and packs the products in a box, purchase a shipping label and input its tracking number, or just mark the item as fulfilled. A custom fulfillment service may send an email (e.g., a location that does not provide an API connection). An API fulfillment service may trigger a third party, where the third-party application creates a fulfillment record. A legacy fulfillment service may trigger a custom API call from the commerce management engine **136** to a third party (e.g., fulfillment by Amazon). A gift card fulfillment service may provision (e.g., generating a number) and activate a gift card. Merchants may use an order printer application to print packing slips. The fulfillment process may be executed when the items are packed in the box and ready for shipping, shipped, tracked, delivered, verified as received by the customer, and the like.

If the customer is not satisfied, they may be able to return the product(s) to the merchant. The business process merchants may go through to "un-sell" an item may be implemented by a return component. Returns may consist of a variety of different actions, such as a restock, where the product that was sold actually comes back into the business and is sellable again; a refund, where the money that was collected from the customer is partially or fully returned; an accounting adjustment noting how much money was refunded (e.g., including if there was any restocking fees, or goods that weren't returned and remain in the customer's hands); and the like. A return may represent a change to the contract of sale (e.g., the order), and where the ecommerce platform **100** may make the merchant aware of compliance issues with respect to legal obligations (e.g., with respect to taxes). In some embodiments, the ecommerce platform **100** may enable merchants to keep track of changes to the contract of sales over time, such as implemented through a sales model component (e.g., an append-only date-based ledger that records sale-related events that happened to an item).

### COMPONENTS OF ILLUSTRATIVE SYSTEM

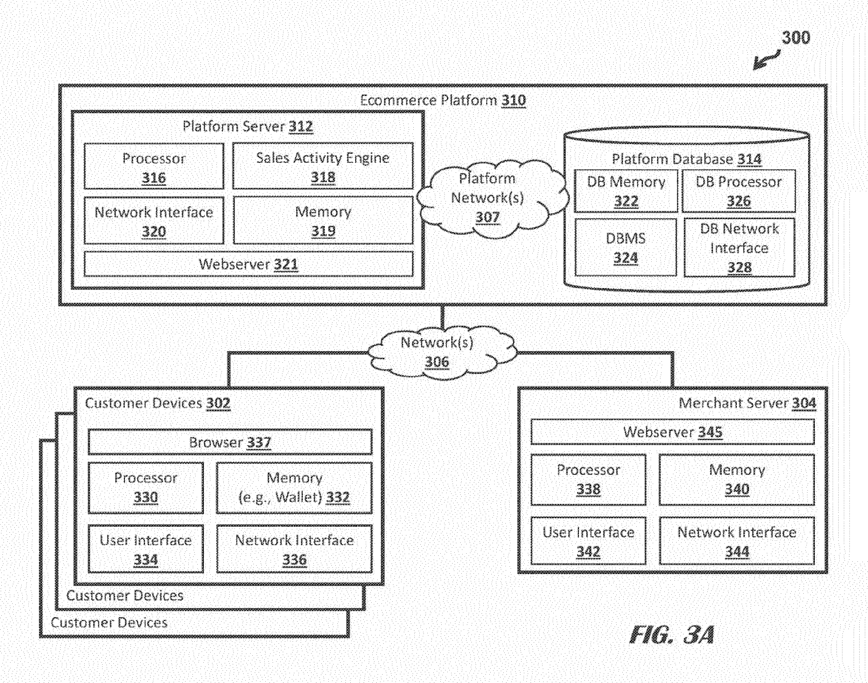

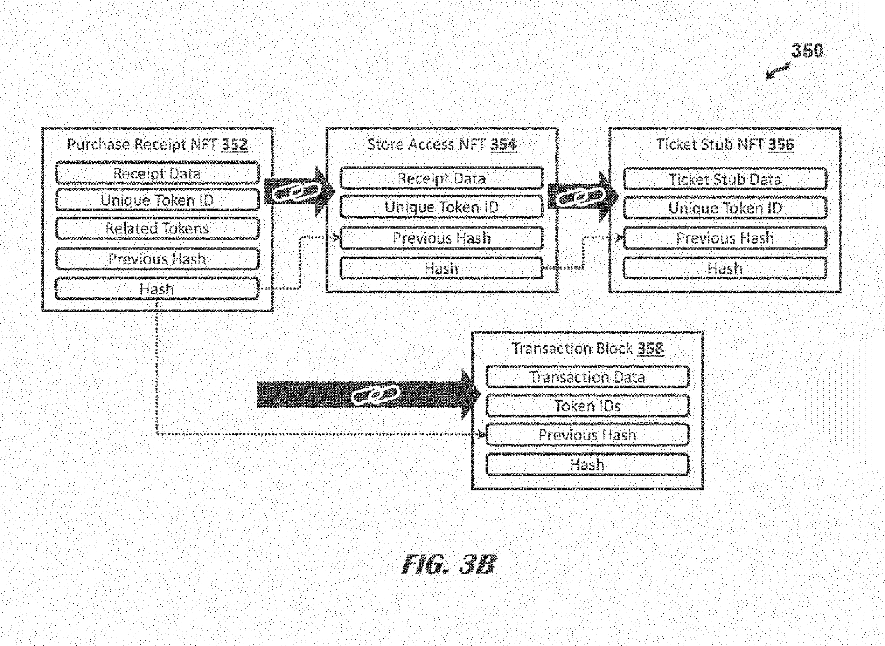

**FIG. 3A** shows components of a system **300** according to an embodiment. The system **300** includes customer devices **302,** merchant servers **304,** and ecommerce platform **310,** each of which may communicate with another via one or more networks **306.** The ecommerce platform **310** implements a blockchain **350** for tracking purchase activities and mining various types of information about customers of the ecommerce platform **310.** **FIG. 3B** illustrates various types of entries (e.g., blockchain blocks, NFTs) of the blockchain **350** implemented by the system **300.** The system **300** is described and shown in **FIGS. 3A-3B** as having one of each component for ease of description and understanding of an example. It should, however, be appreciated that embodiments may include any number of the components described herein. It should be further appreciated that embodiments may comprise additional or alternative components, or may omit certain components, and still fall within the scope of this disclosure.

The computing devices of the system **300** may participate as nodes of a blockchain **350,** though embodiments may implement any form of distributed ledger, such as a ledger table. The blockchain **350** may include any number of entries, or blocks, representing various types of data, such as data about customers, merchants, and transactions. A blockchain block may be a discrete unit of data entered to the blockchain **350.** The block may contain various types of related data such that the block represents a certain type of information relevant to the blockchain **350.** The block's data may also include various cryptographic identifiers that associate the block with blockchain **350.** For example, the store access token **354** includes the hash of the purchase receipt token **352** and another hash unique to the store access token **354,** and the ticket stub token **356** includes the hash of the store access token **354** and another hash unique to the ticket stub token **356.** This is merely an example and not limiting on potential data values or algorithms for the blocks. NFTs are a type of blockchain block that includes more uniquely identifying data, typically requiring more computationally expensive algorithmic operations to generate. The NFTs may represent unique types of information and/or unique off-chain assets (e.g., unique or quasi-unique products), because unique data entries, unique identifiers, and/or unique off-chain assets render the NFTs non-fungible-not freely interchangeable with other blocks of the blockchain **350.**

As an example, the transaction block **358** includes transaction data for a particular purchase transaction, which may be in the form of pointers to storage memory locations containing actual data values or data files. The transaction blocks **358** are not entirely non-fungible. The blockchain **350** may contain a plurality of transaction blocks **358,** each with pointers to respective off-chain storage memory locations that actually contain the transaction data, so the transaction blocks **358** could be relatively interchangeable. In these examples, it may be unnecessarily complex and expensive to generate the transaction blocks **358** as NFTs. On the other hand, for example, the ticket stub token **356** may represent a unique ticket stub for a concert (or similarly unique product) and, therefore, the ticket stub token **356** must be unique. The ticket stub token **356** contains, for example, unique identifier information for the ticket stub token **356** and unique media data (e.g., image file) for the ticket stub. The ticket stub token **356** or other NFTs of the blockchain **350** may be generated using algorithms that take multiple cryptographic values (e.g., encryption key, digital signature, digital certificate, salt, seed) and unique types of data to output the one or more unique identifiers. The ticket stub token **356** may also contain the unique ticket stub data (e.g., image data) corresponding to the unique ticket stub, furthering the uniqueness of this particular block-entry to the blockchain **350.** The ticket stub token **356** is not feasibly interchangeable or exchangeable with another ticket stub token (not shown) in the blockchain **350** or in another blockchain (not shown). Nevertheless, the terms "token" and "blockchain block" merely refer to examples of entries of the blockchain **350** and do not limit potential embodiments. For example, the ticket stub token **356** may be a typical blockchain block, rather than an NFT (as in the blockchain **350**). As another example, the transaction blocks **358** may be NFTs, rather than just a blockchain block (as in the blockchain **350**).

The blocks of the blockchain **350** may include typical blockchain blocks, NFTs, or entries to a ledger table, or any combination thereof. As an example, when the customer purchases a concert ticket from a merchant, the merchant server **304** issues a set of NFTs representing the purchase receipt, a special store access token, and the ticket stub. In this example, the blockchain **350** includes a transaction block **358,** the store access token **354,** and the ticket stub token **356,** among other potential blocks. The transaction block **358** may be a blockchain block representing the transaction data associated with the particular purchase transaction. The store access token **354** may be an NFT representing access data associated with certain privileges or incentives offered by the merchant, and the ticket stub token **356** may be an NFT representing ticket stub data (e.g., media image) for the ticket that the customer purchased from the particular merchant. The system **300** may implement any number of open source or proprietary blockchain programs, such as Ethereum, EOS, and Flow, where the participating nodes generate the various blocks of the blockchain **350** according to the processes of the particular blockchain program for generating interrelated blockchain blocks or NFTs.

The one or more networks **306** may include any number of public networks and/or private networks, which could include computing networks or telecommunications networks. For instance, the network **306** comprises hardware and software components implementing various network and/or telecommunications protocols facilitating communications between various devices, which may include the devices of the system **300** or any number of additional or alternative devices not shown in **FIG. 3****.** For example, the network **306** includes a cellular network, a Wi-Fi network (or other wired local area network (LAN) or wireless LAN), a WiMAX network or other wireless or wired wide area network (WAN), and the like. The network **306** may also communicate with external servers of other external (or third party) services coupled to the network **306,** such as servers hosting a social media platform or a banking platform.

The network **306** may include any number of security devices or logical arrangements (e.g., firewalls, proxy servers, DMZs) to monitor or otherwise manage web traffic to the ecommerce platform **310.** Security devices may be configured to analyze, accept, or reject incoming web requests from customer devices **302** or merchant servers **304.** In some embodiments, a security device may be a physical device (e.g., a firewall). A security device may be a software application (e.g., Web Application Firewall (WAF)) hosted on, or otherwise integrated into, another computing device of the system **300.** The security devices monitoring web traffic are associated with, and administered by, the ecommerce platform **310.**

The ecommerce platform **310** is a computing system infrastructure owned and/or managed by an ecommerce service and, in some embodiments, may be the same as or similar to that described with reference to **FIG. 1****,** though this need not be the case. The ecommerce platform **310** may include electronic hardware and software components capable of performing various processes, tasks, and functions of the ecommerce platform **310.** For instance, the computing infrastructure of the ecommerce platform **310** may comprise one or more platform networks **307** interconnecting the components of the ecommerce platform **310.** The platform networks **307** may comprise one or more public and/or private networks and include any number of hardware and/or software components capable of hosting and managing the networked communication among devices of the ecommerce platform **310.**

The ecommerce platform **310** may comprise the platform server **312** and the platform database **314,** though embodiments may include additional or alternative components capable of performing the operations described herein. The components of the ecommerce platform **310** may be embodied in separate computing devices interconnected via one or more public and/or private internal networks of the one or more platform networks **307,** while some components of the ecommerce platform **310** may be integrated into a single device. For instance, the platform server **312** may host the platform database **314,** even though such integration is not shown in **FIG. 3****.** Furthermore, the ecommerce platform **310** may include any number of platform servers **312** (described further below) configured to serve various functions of the ecommerce platform **310.** For ease of discussion, the ecommerce platform **310** of the system **300** illustrated by **FIG. 3** shows one platform server **312** performing the various functions of the ecommerce service. Potential embodiments are, however, not limited to the description of the system **300** or the illustration of **FIG. 3** and may include any number of computing devices functioning as any number of platform servers **312.** The software and hardware of the platform server **312** may be integrated into a single distinct physical device (e.g., a single platform server **312**) or may be distributed across multiple devices (e.g., multiple platform servers **312**). For example, some operations may be executed on a first computing device while other operations may be executed on a second computing device, such that the functions of the platform server **312** are distributed among the various computing devices. In some implementations, the platform server **312** may be a virtual machine (VM) that is virtualized and hosted on computing hardware configured to host any number of VMs.

The platform database **314** stores and manages data records concerning various aspects of the ecommerce platform **310,** including information about, for example, customers, merchants, transactions, electronic devices associated with system **300,** merchant offerings (e.g., products, inventory, services), various metrics and statistics, machine-learning models, merchant pages hosting merchant stores, and other types of information related to the ecommerce platform **310.** The platform database **314** may be hosted on any number of computing devices having a processor (sometimes referred to as a database (DB) processor **326**) and non-transitory machine-readable memory configured to operate as a DB memory **322,** and capable of performing the various processes and tasks described herein. For example, one or more platform servers **312** may host some or all aspects of the platform database **314.**

The computing device hosting the platform database **314** may further include a DB network interface **328** for communicating via platform networks of the ecommerce platform **310.** The structure of the DB network interface **328** may depend on how the hardware of the platform database **314** interfaces with other components of the ecommerce platform **310.** For example, the platform database **314** may be connected to the platform network **307** with a network cable, the DB network interface **328** may include, for example, a NIC, a computer port, and/or a network socket. The DB processor **326** directly performs or instructs all of the operations performed by the platform database **314.** Non-limiting examples of such operations include processing queries or updates received from platform servers **312,** customer devices **302,** and/or merchant servers **304;** preparing information for transmission via the platform network and/or the external networks **306;** and processing data received via the platform network and/or the external networks **306.** The DB processor **326** may be implemented by one or more processors that execute instructions stored in the DB memory **322** or other non-transitory storage medium. Alternatively, some or all of the DB processor **326** may be implemented using dedicated circuitry, such as an ASIC, a GPU, or a programmed FPGA.

Moreover, a computing device hosting the platform database **314** may include and execute database management system (DBMS **324**) software, though DBMS **324** is not required in every configuration. The platform database **314** may be a single, integrated database structure or may be distributed into any number of database structures that are configured for some particular types of data needed by the ecommerce platform **310.** For example, a first database may store user credentials and may be accessed for authentication purposes, and a second database could store raw or compiled machine-readable software code (e.g., HTML, JavaScript) for webpages such that the DB memory **322** is configured to store information for hosting webpages. The DB memory **322** of the platform database **314** may contain the recipient data records, transaction data records, and/or merchant data records. The platform server **312** may issue queries to the platform database **314** and updates based upon, for example, merchant transaction records or new user records (e.g., new buyer, new recipient) of the ecommerce platform **310.** The platform database **314** further stores various types of data received from customer devices **302** or merchant servers **304.** The DB memory **322** of the platform database **314** may store various types of information about the customers, merchants, and transactions, which the platform server **312** or merchant server **304** may access when performing certain operations.

The platform server **312** may be any computing device that comprises a server processor **316** and non-transitory machine-readable storage media (e.g., server memory **319**) and that is capable of executing the software for one or more functions, such as a sales activity engine **318.** The server memory **319** may store or otherwise contain the computer-executable software instructions, such as the sales activity engine **318.** The software and hardware components of the platform server **312** may enable the platform server **312** to perform the various operations described herein. For example, the platform server **312** executes platform webserver software **321** (e.g., Apache^{®}, Microsoft IIS^{®}) for hosting webpages, websites, and various web-based services. As another example, the platform server **312** may execute software for monitoring and analyzing data traffic between customer devices **302,** merchant servers **304,** and the ecommerce platform **310.** These are merely examples and are not intended to be limiting as to the potential arrangements or functions of the platform servers **312.** Non-limiting examples of the platform server **312** may include desktop computers, laptop computers, and tablet devices, among others. In addition, the sales activity engine **318** need not be a component of the platform server **312** or the ecommerce platform **310.** In some embodiments, the sales activity engine **318** is a component of and executed by the merchant server **304.**

The platform server **312** may mint (generate and issue) the set of NFTs associated with purchase activity, where the NFTs represent various aspects of the purchase transaction. Additionally or alternatively, the merchant server **304** may mint the set of NFTs for purchase activity occurring at the corresponding merchant online store hosted on the merchant server **304,** though for ease of description the platform server **312** mints the NFTs and generates the transaction blocks **358.** The platform server **312** may generate the NFTs or other blocks for a particular purchase transaction according to default configurations or configurations received from the merchant server **304** (or other device of the merchant). In operation, when the customer confirms a purchase transaction on the merchant online store, the merchant server **304** may send transaction data to the platform server **312.** The platform server **312** may determine whether a product associated with the purchase transaction requires new NFTs, and which NFTs to generate, according to the configurations corresponding to merchant data or product data stored in the server memory **319** or the DB memory **322.** NFTs may be generated before a purchase transaction, upon initiation or completion of steps in a purchase transaction, or after a purchase transaction.

For the particular purchase transaction, the platform server **312** may generate the new blocks of the blockchain **350** using the transaction data received from the merchant server **304.** As shown in **FIG. 3B****,** the platform server **312** may generate the set of NFTs of the purchase transaction, such as the purchase receipt token **352,** store access token **354,** and the ticket stub token **356,** as well as the transaction block **358.** The platform server **312** may algorithmically generate one or more identifier or hash values for the various new blocks (e.g., blockchain block, NFT). For example, each block of the blockchain **350** includes the previous hash value of the preceding block and a new hash value, based in part on the previous hash value and/or data of the particular new block. As another example, the NFTs may include unique token identifiers that uniquely identify each particular NFT and render the particular NFT non-fungible and non-interchangeable with other blockchain blocks or NFTs of the blockchain **350.**

The purchase receipt token **352** may represent receipt data, including some or all of the transaction data (e.g., party identifiers, product identifier, payment data), and indicators of the set of NFTs associated with the purchase (e.g., store access token **354,** ticket stub token **356**), among other types of information. The purchase receipt token **352** may further include the algorithmically generated unique token identifier, the new hash of the purchase receipt token **352,** and in some cases the previous hash of a preceding block of the blockchain **350.**

The store access token **354** may represent the store access data associated with certain privileges, functionality, or other services offered by the merchant to reward or incentivize customer purchases. For example, the merchant incentivizes customer purchases of products by offering access to limited-release products or prioritized-purchasing rights if the customer "collects" a threshold number of store access tokens **354** or a predetermined set of store access tokens **354.** In this example, the platform server **312** may receive a wallet confirmation query from the merchant server **304** requesting the platform server **312** confirm the contents of the customer's wallet. The platform server **312** may query the customer's wallet (or other nodes of the system **300**) to determine whether the customer's wallet contains the particular store access tokens **354,** as indicated by the confirmation query. The platform server **312** may send a response to the merchant server **304** indicating whether the customer's wallet contains the particular store access tokens **354,** triggering the merchant server **304** to grant or deny access to product webpages accordingly. The store access token **354** may further include the algorithmically generated unique token identifier, as well as the hash of the purchase receipt token **352** and a new hash.

The ticket stub token **356** may represent the ticket stub data, such as event data (e.g., date/time, venue, event/performance information) and media data. For example, the ticket stub data may include an image file containing an image of the ticket for display via a UI of a computing device. The ticket stub token **356** may further include the algorithmically generated unique token identifier, as well as the hash of the store access token **354** and a new hash. The ticket stub token **356** is only an example, but the blockchain **350** may include any type of product data token representing any type of product, such as any tangible product or service offered by the merchants of the ecommerce platform **310.**

The transaction block **358** may represent the various types of transaction data, such as the party identifiers (e.g., merchant identifier, customer identifier), a product identifier, and token identifiers associated with the NFTs of the purchase transaction, among others. The platform server **312** may generate the transaction blocks **358** on a portion of the blockchain **350** parallel from (or in-line with) the NFTs of the particular transaction. The transaction block **358** may further include the preceding hash of the purchase receipt token **352** and a new hash.

In some circumstances, a transaction is customer-to-customer (e.g., selling user-to-buying user), rather than customer-to-merchant. A user who received the set of NFTs from the merchant may in turn sell a subset of the NFTs to another user. For example, the customer may sell the ticket stub token **356** to another user who collects event tickets, but keeps the store access token **354** granting access to the merchant webpage offering souvenir products of the event. The customer devices **302** may access a webpage or program facilitating user-to-user NFT sales, which instruct the platform server **312** to query and update the ownership of the ticket stub token **356** in the users' respective wallets. The platform server **312** may further generate one or more transaction blocks **358** containing the transaction data for the user-to-user transaction.

In some embodiments, the software (e.g., sales activity engine **318**) of the platform server **312** may analyze the NFTs in the one or more customer wallets to track the purchasing behaviors of the one or more customers and generate a transaction history or patterns for the customers, or trends for merchant products. The platform server **312** may produce various outputs to the customers or the merchants of the ecommerce platform **310** based on these analytics. The platform server **312** may cross-reference data for prior product purchase transactions (e.g., tickets, receipts, downloaded albums) in the NFTs or in transaction history stored on the blockchain **350,** the platform database **314,** or other storage medium, to derive information (e.g., venue, genre, pricing, artist) to identify and suggest purchases (e.g., concert events) of interest. The platform server **312** may predict a future product or service of interest for the customer based upon the NFTs already in the customer's wallet or in the transaction history data associated with the customer UID. The platform server **312,** for example, predicts future purchases to determine and present targeted products or offers, offers certain purchasing opportunities to the customers, and establishes a provenance platform for verifying future transactions associated with NFTs, among other potential operations.

In the example system **300,** the platform server **312** may evaluate the data of the purchase receipt tokens **352** associated with the customer or the various ticket data of the ticket stub tokens **356** to determine common purchasing patterns based on similarities in data fields of the various types of data, such as the event type (e.g., concert, sporting event), genre (e.g., pop, rock, football, hockey), performers (e.g., artist, team), venue, or geolocation (e.g., city, metropolitan area), among other data fields. The platform server **312** then transmits suggested products to the customer device **302** or information about potential customers to the merchant server **304.** The platform server **312** may perform the particular analytics according to a default configuration as a default service offering of the ecommerce platform **310** provided to the merchants or customers, or according to configurations entered by the merchant or customer as a customized service offering of the ecommerce platform **310.** In one example, the platform server may predict an upcoming event (such as a concert) for a musician based upon previous purchases associated with that musician or a similar genre.

The platform server **312** may function as a bridge or escrow that temporarily stores NFTs in certain circumstances. The platform server **312** may receive and temporarily store the NFT in the platform server memory **319** or platform database **314,** while the merchant server **304** or platform server **312** executes certain operations. For instance, the blockchain may include any number of smart contracts executed when conducting various transactions or performing other operations. A smart contract may include a computer program, transaction protocol operation, or machine-readable programming, where the smart contract may instruct nodes to perform various operations for automatically executing or controlling device actions related to the blockchain **350** and blockchain assets. The platform server **312** may execute the machine-readable instructions of a smart contract of the blockchain **350** that instructs the platform server **312** to take custody of and store into the temporary storage location, the requisite access NFT needed for the access rights to a particular access-controlled webpage of the merchant server **304.** The platform server **312** may maintain custody over the access NFT while the customer navigates the webpage and the browser **337** maintains a browser session with or connection to the particular webpage of the merchant store. The smart contract may instruct the platform server **312** to transfer the access NFT back to the customer's wallet when the merchant server **304** or customer device **302** indicates that the browser session concludes or otherwise detects another triggering condition.

As an example, the smart contract may instruct the platform server **312** to extract the store access token **354** from the customer's wallet and store the store access token **354** into the platform server memory **319.** When the customer device **302** accesses restricted features of the merchant website, the platform server **312** receives one or more customer UIDs associated with the customer or the customer device **302,** which the platform server **312** references to determine whether the customer's wallet associated with the customer UID contains the store access token **354** required by the merchant server **304** to access the restricted features. The platform server **312** may execute the smart contract of the blockchain **350** instructing the platform server **312** to store the store access token **354** or other NFTs into the platform server memory **319** and/or update the blockchain **350** to include a transaction block **358.** The platform server memory **319** of the platform server **312** may store the store access token **354** until certain criteria of the smart contract are satisfied (e.g., customer logs off merchant website, customer device **302** ends browser session with merchant server **304.** When the platform server **312** determines that the criteria is met, the programming of the smart contract instructs the platform server **312** to transfer custody over the store access token **354** back to the customer wallet. In some instances, the platform server **312** or merchant server **304** may mint a set of one or more new NFTs (not shown) based upon further purchase transactions initiated by the customer device **302** when accessing the restricted features of the merchant website.

Merchant servers **304** may be electronic devices associated with merchant accounts of the ecommerce platform **310** and host online merchant stores of a particular merchant. Customer devices **302** may be electronic devices associated with users (sometimes referred to herein as "client users" or "customers") who are not operating as merchants, where such user may include end-point customers or potential customers, and who are visiting the online stores of the merchants on the ecommerce platform **310.** In some circumstances, the merchant server **304** and the customer device **302** may be the same computing device. For example, a merchant-user may sometimes act as a customer-user navigating webpages of another online merchant store website associated with the ecommerce platform **310.** In this example, the customer device **302** functions as the merchant server **304,** though the customer device **302** may function as a particular customer device **302** at other times. The merchant-user may use the same computing device to both configure the settings for the online merchant store (or other configuration settings) and then browse the online stores of other merchants on the ecommerce platform **310.**

The customer device **302** may be a mobile phone, tablet, laptop, or computer operated by or otherwise associated with the customer-user. The customer device **302** may include a customer processor **330,** customer memory **332,** customer user interface **334,** and customer network interface **336.** The customer user interface **334** may include, for example, a display screen (which may be a touch screen) and graphical user interface (GUI), a gesture recognition system, a keyboard, a stylus, and/or a mouse. The customer network interface **336** may comprise hardware and software programming for the customer device **302** to communicate over the one or more networks **306.** The structure of the customer network interface **336** will depend on how the customer device **302** interfaces with the network **306.** For example, if the customer device **302** is a mobile phone or tablet, the customer network interface **336** may include a transmitter/receiver with an antenna to send and receive wireless transmissions to/from the network **306.** If the customer device **302** is a personal computer connected to the network **306** with a network cable, the customer network interface **336** may include, for example, a network interface card (NIC), a computer port, and/or a network (hardware, software, or logical) socket. The customer processor **330** directly performs or instructs all of the operations performed by the customer device **302.** Non-limiting examples of these operations include processing user inputs received from the customer user interface **334,** preparing information for transmission over the network **306,** processing data received over the network **306,** and instructing a display screen to display information via the GUI of the customer user interface **334.** The customer processor **330** may be implemented by one or more processors that execute instructions stored in the customer memory **332.** Alternatively, some or all of the customer processor **330** may be implemented using dedicated circuitry, such as an ASIC, a GPU, or a programmed FPGA.

The merchant server **304** may be a mobile phone, tablet, laptop, or computer used by a merchant. The merchant server **304** includes a merchant processor **338,** merchant memory **340,** a merchant user interface **342,** and a merchant network interface **344.** An example of a merchant user interface **342** is a display screen (which may be a touch screen) and graphical user interface (GUI), a keyboard, a gesture recognition system, a stylus, and/or a mouse. The merchant network interface **344** may be provided for communicating over the network **306.** The structure of the merchant network interface **344** may depend on how the merchant server **304** interfaces with the network **306.** For example, if the merchant server **304** is a mobile phone or tablet, the merchant network interface **344** may include a transmitter/receiver with an antenna to send and receive wireless transmissions to/from the network **306.** If the merchant server **304** is a personal computer connected to the network **306** with a network cable, the merchant network interface **344** may include, for example, a NIC, a computer port, and/or a network socket. The merchant processor **338** directly performs or instructs all of the operations performed by the merchant server **304.** Examples of these operations include processing user inputs received from the merchant user interface **342,** preparing information for transmission over the network **306,** processing data received over the network **306,** and instructing a display screen to display information via the GUI of the merchant user interface **342.** The merchant processor **338** may be implemented by one or more processors that execute instructions stored in the merchant memory **340.** Alternatively, some or all of the merchant processor **338** may be implemented using dedicated circuitry, such as an ASIC, a GPU, or a programmed FPGA.

The merchant server **304** may include software and hardware components enabling Internet or other forms of networked communication with components of the system **300** (e.g., platform server **312,** customer device **302**), as well as enabling the merchant server **304** to perform the various functions described herein. For example, the merchant server **304** may execute merchant webserver software **345** (e.g., Apache^{®}, Microsoft IIS^{®}) to generate and present merchant webpages or other merchant information to the customer device **302** for the merchant's website, which includes the merchant's online store. These are merely examples and are not intended to be limiting as to the potential arrangements or functions of the merchant server **304.**

The customer device **302** may execute a software application for navigating the merchant stores available through the ecommerce platform **310,** where the software application may be a web browser **337** (e.g., Chrome^{®}, Firefox^{®}, Internet Explorer^{®}) or a native buyer application ("app") published by (or otherwise associated with) the ecommerce platform **310** and installed on the customer device **302.** The customer device **302** is described as executing the web browser **337** for ease of discussion, though there is no such limitation. When the customer selects the merchant store via the user interface **334** of the browser **337,** the customer device **302** may connect to the platform server **312** and the merchant server **304** hosting the merchant store webpage using one or more IP Addresses that the customer device **302** obtained by translating a domain name for the merchant store and the merchant server **304.**

When the customer device **302** visits the online store of a merchant, the platform server **312** of the ecommerce platform **310** may serve a catalog of available products offered by the merchant, displayed in a webpage GUI via the browser **337.** The browser **337** may transmit a request to the ecommerce platform **310** for the product information or webpage of the online store of the merchant. The platform server **312** may receive the request for the webpage from the browser **337** and, in return, the platform server **312** and/or the merchant server **304** may transmit the requested product webpage of the merchant's online store for display via the browser **337.** In operation, the platform server **312** may provide a catalog webpage that presents the catalog of available merchant stores or products for display via the browser **337.** The customer may select the particular merchant by entering a merchant selection input into the browser **337.** In response to this input, the browser **337** may transmit a request for a merchant webpage to the platform server **312** and the merchant server **304.** The request for the merchant webpage may instruct the platform server **312** and merchant server **304** to return the webpage containing the desired merchant information. The customer may then select the particular product of interest by entering a product selection input into the browser **337,** causing the customer device **302** to transmit a request for a product webpage to the platform server **312** and the merchant server **304.** The request for the product webpage may instruct the platform server **312** and the merchant server **304** to return the webpage containing the product information. The browser **337** may display the webpage containing the product information to the customer.

The browser **337** accesses and interacts with the webpages of the merchant's online website. Each webpage of the merchant's online store website comprises various types of content. The machine-readable code of the webpage content includes executable instructions for the browser **337** to perform the various client-side operations, such as displaying visual content of the webpage (via the customer user interface **334**), performing certain computations, calling/retrieving data files or executable scripts, or updating various types of data, among other operations performed by the browser **337** or the customer device **302.** The webpage content includes the entire webpage, portions of the webpage, or sub-components of the webpage (e.g., applets, containers, elements, frames, features, data objects, data files). The code of the webpage content comprises one or more types of code languages or types of data (e.g., HTML, XML, CSS, PHP, JSON, JavaScript, Python). During execution, the browser **337** parses the code of the webpage content, performs the various operations according to the code, and exchanges data values with the merchant server **304** according to the code of the webpage content. For instance, the browser **337** identifies the call to the script (or other machine-executable code) within the code of the webpage content and then executes the computations of the script.

As an example, the customer device **302** transmits the request for webpage content of the merchant store to the merchant server **304** through the platform server **312.** The merchant webserver software **345** executed by the merchant server **304** generates and returns the requested content to the customer device **302.** The browser **337** of the customer device **302** parses the machine-readable code (e.g., HTML, XML, JavaScript, PHP, Ruby, Python) of the webpage content and interprets the code into the machine-executable instructions executed by the customer processor **330** to perform various browser-side (or client-side) operations. Non-limiting examples of such browser **337** operations interpreted and prompted by the instructions include: displaying certain content via the browser **337** and the customer user interface **334;** fetching or calling scripts or data files; or performing the various computations, among other client-side operations.

When the customer device **302** connects with the merchant webserver **345** or at a given time thereafter, the browser **337** and the merchant server **304** may establish a session (e.g., client-side HTTP session, server-side HTTP session) based on the browser **337** successfully accessing the merchant's webpage of the merchant website. By establishing the session, the browser **337** and/or the merchant webserver **345** may maintain, access, store, and update persistent state information about the ongoing session, enabling the browser **337** and merchant webserver **345** associated with the session to track events and data occurring during the interactions between the browser **337** and the webserver **345.** Data traffic between the customer device **302** and the merchant server **304** may flow through the ecommerce platform **310,** allowing the platform server **312** to monitor and access the data traffic and associate with the session. The various types of information generated during the session, such as the test values or the line items (code representing particular products), may be stored into the customer memory **332,** the merchant memory **340,** platform memory **319,** or other non-transitory machine-readable storage medium.

During a purchase event, the blockchain may mint a set of one or more NFTs related to the purchase event for the transaction related to the one or more NFTs. For example, any participating node executing the blockchain software (e.g., the merchant server **304**, platform server **312**) may initiate the minting of the set of NFTs related to the purchase and transmits the NFTs to the customer device **302** or any memory location storing the customer's blockchain wallets (e.g., platform database **314**, customer memory **332**). The NFTs may include various aspects of the purchase event as configured by the merchant server **304** or the ecommerce platform **310**, such as the NFTs for the product, the receipt, the merchant store's special access privileges, or a certificate of authenticity, among other aspects of the purchase event. Although described in the example as the set of NFTs, the system **300** may implement a single NFT containing the various types of data.

In some embodiments, the ecommerce platform **310** may permit the customers to exchange the subset of the NFTs associated with a particular purchase. For example, when the customer purchases concert tickets from an authorized ticket merchant, the merchant server **304** mints and issues the set of NFTs of the blockchain **350**, including the purchase receipt token **352**, the ticket stub token **356** for the ticket itself, the store access token **354** granting access or priority to an online merchandise store (e.g., souvenir shop) hosted by the merchant server **304**, as well as a certificate of authenticity (not shown) and an event souvenir program (not shown). In this example, the customer device **302** of the seller-customer accesses a webpage hosted by the platform server **312** or transactional software program to sell the ticket stub token **356**, but the customer keep the store access token **354** to maintain access rights the online merchandise store and the token for the souvenir program to have the program as a keepsake. Likewise, the customer device **302** of the buyer-customer accesses the webpage or transactional software program to purchase the ticket stub token **356** to attend the event or acquire the ticket stub for a collection. The platform server **312** may evaluate the content of the seller-customer's wallet to determine whether the seller-customer's wallet was assigned (or "contains") the ticket stub token **356** and to confirm whether the customer-to-customer transaction should proceed. If the transaction proceeds, the platform server **312** or one of the customer devices **302** may update the customer wallets to reflect the change in ownership. In some implementations, the platform server **312** or customer device **302** may generate a transaction block **358** recording the customer-to-customer transaction for the ticket stub token **356.**

The merchant server **304** or platform server **312** may mint the set of NFTs in response to completing the purchase transaction processes and, in some cases, in response to receiving confirmation from another device of the system **300** (e.g., customer device **302**, merchant server **304,** platform server **312**). In some circumstances, however, the merchant may mint a predefined number of NFTs before a given product is publicly available or sold, thereby representing a limited or known amount of inventory for the given product. For example, the merchant knows the number of concert tickets available for a given venue, and the merchant server **304** may mint the NFTs for the particular seats. When the customer purchases a particular ticket, the merchant server **304** or platform server **312** may then transfer the NFTs from the merchant's wallet stored in a storage location (e.g., platform database **314,** platform server memory **319,** merchant memory **340**) to the customer's wallet in the same or different storage location (e.g., customer memory **332,** platform database **314**), thereby transferring custody and ownership of the NFTs minted for the particular ticket. The merchant server **304** or platform server **312** may generate a new transaction block **358** to record the new purchase transaction. Additionally or alternatively, the merchant server **304** updates an inventory listing in the merchant memory **340** to reflect the decremented available inventory.

In some embodiments, the merchant offers various rewards or incentives to customers who purchase a threshold number of products or certain predetermined products. The merchant server **304** may provide certain benefits, functions, or features to the customers or customer devices **302** possessing a certain NFT or collection of NFTs in one or more customer wallets. When the customer's browser **337** returns to the merchant webpage or another merchant webpage, the merchant server **304** or platform server **312** may detect a unique identifier (UID) of the customer (e.g., login credentials, username) or the merchant server **304** (e.g., MAC address, IP address, computer name, browser fingerprint) to query the customer wallets, stored in the platform database **314** or other memory location. The merchant server **304** may determine the NFTs assigned to the customer's wallets and then may query the transaction data stored in the platform database **314** or the transaction blocks **358** and/or queries the ownership of the NFTs in the customer's wallets. In response to the one or more queries of the merchant server **304,** the platform server **312** may return a binary indicator (yes or no) or transaction data of customer NFTs to the merchant server **304,** indicating to the merchant server **304** which NFTs are assigned to the customer's wallet. The platform server **312** may automatically identify the set of NFTs assigned to the customer's wallet and associated with a particular merchant's store or merchant server **304.** For example, after the customer purchases the concert tickets, the platform server **312** or other device assigns the store access token **354** to the customer wallet stored in the platform server **312** or other device. When the browser **337** accesses the merchant's online store, the merchant server **304** may determine or receive an indicator that the store access token **354** is assigned to the customer's wallet. The merchant server **304** may then grant the customer device **302** access rights to the webpages offering souvenir products for the concert. The merchant webserver **345** may then transmit the privileged-controlled webpage to the browser **337.**

Additionally or alternatively, the merchant server **304** or the platform server **312** may determine a priority status for customer access to the merchant website or other merchant website according to the store access token **354** and the settings of the merchant webpage. The merchant server **304,** for example, may offer purchasing priority to the customer having a particular store access token **354** granting, to the customer device **302,** priority access to a particular product webpage or other service offered by the same or different merchant.

As an example, when the customer purchases a concert ticket (or other type of product purchase) from a first website of an online ticket merchant, the merchant server **304** of the first website may issue the set of NFTs, such as the NFTs shown in **FIG. 3B****.** The merchant server **304** or platform server **312** may store the set of NFTs into the memory storage medium containing the customer's wallet (e.g., customer memory **332,** merchant memory **340,** platform database **314**). When the customer device **302** later accesses a second merchant website of a second online merchant, the second merchant server **304** may send a query to the platform server **312,** instructing the platform server **312** to confirm whether the customer wallet contains (i.e., was assigned) a particular NFT associated with the concert event (e.g., purchase receipt token **352,** ticket stub token **356**). The platform server **312** may determine that the customer's wallet contains the requisite NFT and returns the indicator to the merchant server **304** indicating that the customer's wallet contains the requisite NFT. The second merchant server **304** may grant permission to the customer device **302,** for a browser session and the merchant webserver **345,** to access privilege-controlled or priority-controlled products offered by the second website or prioritizes purchase transactions initiated by the customer device **302** ahead of the transactions of other customer devices **302.** If one of the merchant servers **304** or the platform server **312** determines the customer wallet does not contain the requisite NFT, then the first or second merchant server **304** may reject or delay the browser's **337** access to the controlled product webpage hosted by the second merchant server **304.**

### EXAMPLE PROCESSES

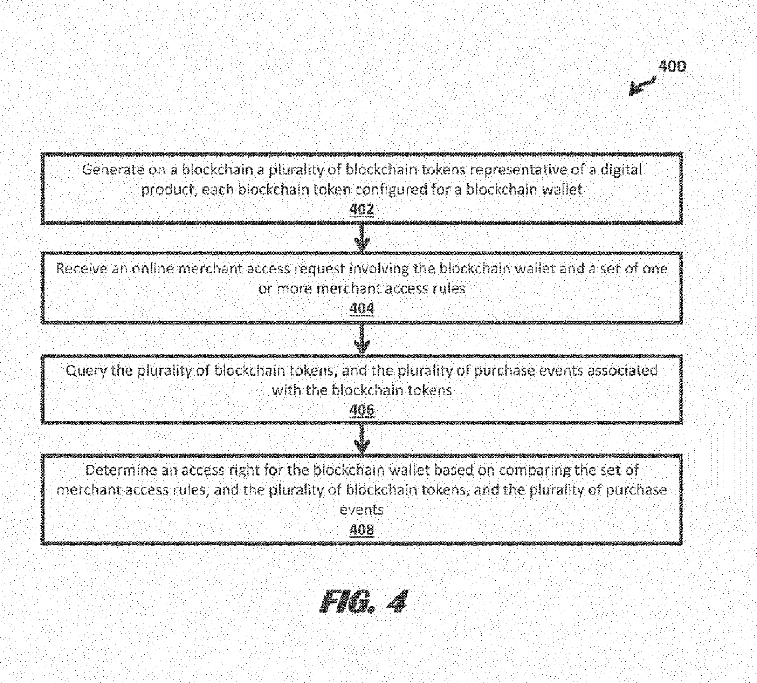

**FIG. 4** shows execution steps of a method **400** performed by an ecommerce platform server, according to an embodiment. Embodiments may include additional, fewer, or different operations than those described in the method **400.** The method **400** is performed by platform server executing machine-readable software code associated with a blockchain and ecommerce platform, though it should be appreciated that one or more computing devices or processors may perform the various operations described in **FIG. 4****.**

In step **402,** the platform server may generate a plurality of blocks (e.g., blockchain blocks, NFTs) on a blockchain representative of a digital product. The blocks include a set of one or more NFTs (sometimes referred to as "tokens") and one or more transaction blocks. The platform server generates the set of NFTs according to a particular blockchain platform software (e.g., Ethereum, Flow, EOS) and corresponding blockchain wallets of a purchasing customer. When the customer device accesses a merchant website and initiates a purchase transaction process for the particular product, a merchant server transmits metadata as transaction data associated with the purchase transaction, to the platform server. Using the transaction data and other types of data, the platform server generates the set of NFTs and a transaction block for the purchase transaction.

In step **404,** the platform server may receive an online merchant access request involving the blockchain wallet and a set of one or more merchant access rules. At a later time, the browser of the customer device navigates to the merchant webpage and establishes the browser session. The customer's inputs into the browser interface and the machine-readable code of the merchant webpage instruct the browser to request access to certain controlled content or features offered by the merchant's online store. The merchant server grants access to the controlled content if the platform server indicates that the customer's blockchain wallet contains one or more access NFTs. The merchant server transmits the merchant request to the platform server, where the merchant request includes query parameters for the platform server to query the customer wallets (as in step **406,** below) to determine whether a particular customer's wallet contains the requisite NFT (as in step **408,** below).

The merchant server may also transmit one or more machine-readable instructions, or rules, to the platform server. The rules further instruct the platform server on conducting the query and determining whether the customer wallet contains the required access NFT or otherwise should receive access to the controlled content of the merchant website. For example, the rules may indicate the particular types of NFTs (e.g., types of blockchain programs) accepted or expected by the merchant server, or data fields for customer information (e.g., customer characteristics) accepted or expected by the merchant server (e.g., customer UID, date/time of customer's attempted access). Additionally or alternatively, the rules trigger or include machine-readable instructions causing the platform server to invoke a particular smart contract of the blockchain according to one or more conditions, or the rules include parameters for invoking the smart contract. For example, certain merchant access rules may indicate to the platform server the expected NFTs for granting access to the customer device, a temporary storage medium for temporarily storing the NFTs, and the conditions for releasing an escrowed NFT back to the customer wallet, among others.

In step **406,** the platform server may query the plurality of blockchain tokens, and the plurality of purchase events associated with the blockchain tokens. The platform server executes the query of the customer blockchain wallets according to access parameters of the merchant access request and, in some cases, the rules received from the merchant server.

When querying the blockchain wallets, the platform server searches and identifies the one or more blockchain wallets having data satisfying the access parameters of the merchant request. The parameters of the merchant request include one or more data fields within, for example, the transaction data, customer data, merchant data, or any other type of data or metadata generated or received by the devices associated with the transaction (e.g., platform server, merchant server, customer device). For example, the query may include the customer UID associated with the ecommerce platform for the customer-user. In this example, the platform server searches any number of blockchain wallets of any number of customers for the one or more blockchain wallets associated with the particular customer UID.

The platform server also queries transaction history data, which may be stored in transaction blocks of the blockchain or transaction data records of a platform database according to the various merchant rules or configurations. For instance, the platform server may search the transaction history data for data records or transaction blocks containing the customer UID, among other data fields. In some cases, based on this additional query, the platform server derives certain expected matching values indicating the customer seeking access to the controlled content webpage is likely the customer that previously purchased the requisite access NFT. This type of search may be beneficial as an additional confirmation that the customer's prior transaction history is relevant to the controlled content for added privacy or security purposes. This type of search may also be beneficial for deriving knowledge about the customer's patterns and product interests, and the product trends and market interest related to the merchant's product or service.

In step **408,** the platform server may determine an access right for the customer's blockchain wallet based on comparing the set of merchant access rules, and the plurality of blockchain tokens, and the plurality of purchase events. If the platform server determines that the customer's blockchain wallet contains the required access NFTs and that the customer's transaction history (of purchase events) satisfy the merchant's rules, then the platform server transmits a response to the merchant server indicating that the customer satisfies the merchant's rules. The merchant server grants the customer device access to the controlled content of the merchant website and/or prioritizes purchase transactions (or other features of the merchant website) initiated by or otherwise associated with the browser of the customer device.

As an example, the merchant server is hosting a flash sale on restricted or limited products. The merchant server may require that the customer have a required access NFT indicating that the customer made a purchase at some prior time, or otherwise acquired the access NFT by performing a certain action. The merchant rules instruct the platform server to take custody over the access NFT while the customer device accesses the restricted content of the merchant's website associated with the file sale. The merchant rules may further prioritize customer purchases according to particular buying behaviors (according to the customer transaction history), as an additional restriction to the requirement to have the access NFT. The customers may be prioritized by, for example, frequency of purchases, locations associated with the purchases (e.g., varied venues for concerts), volume of purchases, or total cash spend for purchase, among others. The customers with the access NFT may access special features, such as access to limited edition products, and then those customers are further prioritized according to the merchant rules. For instance, the platform server and merchant server may grant viewing access to the customers having the access NFT, but the platform server and merchant server deny purchase transaction operations until the platform server takes custody of the access NFT. The platform server, however, only takes custody of the access NFT according to the prioritization instructions of the merchant rules. As another example, the platform server and merchant server may grant viewing access to the customers having the access NFT and the platform server takes custody of the access NFT while the customer browser is connected to the merchant website. When the customer attempts to execute the purchase transaction for the particular product, the platform server queries the customer transaction history to determine the priority status of the customer relative to the other customers accessing the site and reports the priority status as a type of access right to the merchant server. The merchant server executes the respective purchase transactions of the customers in accordance with the relative priority statuses of the customers.

In some embodiments, a computer-implemented method comprises receiving, by the processor, an online merchant access request involving a blockchain wallet and a set of one or more merchant access rules; accessing, by a processor, a plurality of Non-fungible Tokens (NFTs) assigned to the blockchain wallet; and determining, by the processor, an access right for the blockchain wallet based on comparing the set of merchant access rules, the plurality of NFTs, and a plurality of transactions associated with the plurality of NFTs.

In some implementations, the method further comprises querying, by the processor, the plurality of NFTs and the plurality of transactions associated with the plurality ofNFTs.

In some implementations, the method further comprises configuring, by the processor, a smart contract comprising machine-readable instructions for a node to store one or more NFTs assigned to the blockchain wallet responsive to the node receiving a notification of a restricted session between a customer device and an online merchant store.

In some implementations, the method further comprises configuring, by the processor, a smart contract comprising machine-readable instructions for a node to store one or more NFTs assigned to the blockchain wallet according to one or more conditions of the smart contract.

In some implementations, determining the access right includes identifying, by the processor, an NFT assigned to the blockchain wallet corresponding to the access right for content of a merchant website.

In some implementations, determining the access right includes identifying, by the processor, one or more data values, inthe plurality of transactions associated with the plurality ofNFTs, satisfying one or more access parameters in the set of one or more merchant access rules.

In some implementations, determining the access right includes determining, by the processor, a priority status as the access right for the blockchain wallet based upon the plurality of transactions associated with the plurality ofNFTs.

In some implementations, the method comprises transmitting, by the processor, a response to a merchant server indicating the access right for the blockchain wallet based upon comparing the set of merchant access rules, the plurality of NFTs, and the plurality of transactions associated with the plurality of NFTs.

In some implementations, a customer identifier is associated with each of the blockchain wallet, the plurality of NFTs, and the plurality of transactions associated with the plurality of NFTs. The method further comprises receiving, by the processor, from a merchant server the customer identifier associated with the online merchant access request; and querying, by the processor, one or more machine-readable memories according to the customer identifier for the blockchain wallet, the plurality of NFTs, and the plurality of transactions associated with the plurality of NFTs.

In some implementations, the method comprises assigning, by the processor, to a second blockchain wallet an NFT of a subset of one or more NFTs associated with a transaction.

In some embodiments, a system comprises a computer comprising a processor configured to receive an online merchant access request involving a blockchain wallet and a set of one or more merchant access rules; access a plurality of Non-fungible Tokens (NFTs) assigned to the blockchain wallet; and determine an access right for the blockchain wallet based on comparing the set of merchant access rules, the plurality of NFTs, and a plurality of transactions associated with the plurality of NFTs.

In some implementations, the processor is further configured to configure a smart contract comprising machine-readable instructions for a node to store one or more NFTs assigned to the blockchain wallet responsive to the node receiving a notification of a restricted session between a customer device and an online merchant store.

In some implementations, the processor is further configured to configure a smart contract comprising machine-readable instructions for a node to store one or more NFTs assigned to the blockchain wallet according to one or more conditions of the smart contract.

In some implementations, when determining the access right the processor is further configured to identify an NFT assigned to the blockchain wallet corresponding to the access right for content of a merchant website.

In some implementations, when determining the access right includes the processor is further configured to identify one or more data values, in the plurality of transactions associated with the plurality of NFTs, satisfying one or more access parameters in the set of one or more merchant access rules.

In some implementations, when determining the access right the processor is further configured to determine a priority status as the access right for the blockchain wallet based upon the plurality of transactions associated with the plurality of NFTs.

In some implementations, the processor is further configured to transmit a response to a merchant server indicating the access right for the blockchain wallet based upon comparing the set of merchant access rules, the plurality of NFTs, and the plurality of transactions associated with the plurality of NFTs.

In some implementations, a customer identifier is associated with each of the blockchain wallet, the plurality of NFTs, and the plurality of transactions associated with the plurality of NFTs. The processor is further configured to receive from a merchant server the customer identifier associated with the online merchant access request; and query one or more machine-readable memories according to the customer identifier for the blockchain wallet, the plurality of NFTs, and the plurality of transactions associated with the plurality of NFTs.

In some implementations, the processor is further configured to assign to a second blockchain wallet an NFT of a subset of one or more NFTs associated with a transaction.

In some embodiments, a computer storage medium has machine-executable instructions stored thereon that, when executed by one or more processors, cause the one or more processors to receive an online merchant access request involving a blockchain wallet and a set of one or more merchant access rules; access a plurality of Non-fungible Tokens (NFTs) assigned to the blockchain wallet; and determine an access right for the blockchain wallet based on comparing the set of merchant access rules, the plurality of NFTs, and a plurality of transactions associated with the plurality of NFTs.

The various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

Embodiments implemented in computer software may be implemented in software, firmware, middleware, microcode, hardware description languages, or any combination thereof. A code segment or machine-executable instructions may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, attributes, or memory contents. Information, arguments, attributes, data, etc. may be passed, forwarded, or transmitted via any suitable means including memory sharing, message passing, token passing, network transmission, etc.

The actual software code or specialized control hardware used to implement these systems and methods is not limiting of the invention. Thus, the operation and behavior of the systems and methods were described without reference to the specific software code being understood that software and control hardware can be designed to implement the systems and methods based on the description herein.

When implemented in software, the functions may be stored as one or more instructions or code on a non-transitory computer-readable or processor-readable storage medium. The steps of a method or algorithm disclosed herein may be embodied in a processor-executable software module which may reside on a computer-readable or processor-readable storage medium. A non-transitory computer-readable or processor-readable media includes both computer storage media and tangible storage media that facilitate transfer of a computer program from one place to another. A non-transitory processor-readable storage media may be any available media that may be accessed by a computer. By way of example, and not limitation, such non-transitory processor-readable media may comprise RAM, ROM, EEPROM, CD-ROM or other optical disk storage, magnetic disk storage or other magnetic storage devices, or any other tangible storage medium that may be used to store desired program code in the form of instructions or data structures and that may be accessed by a computer or processor. Disk and disc, as used herein, include compact disc (CD), laser disc, optical disc, digital versatile disc (DVD), floppy disk, and blu-ray disc where disks usually reproduce data magnetically, while discs reproduce data optically with lasers. Combinations of the above should also be included within the scope of computer-readable media. Additionally, the operations of a method or algorithm may reside as one or any combination or set of codes and/or instructions on a non-transitory processor-readable medium and/or computer-readable medium, which may be incorporated into a computer program product.

The preceding description of the disclosed embodiments is provided to enable any person skilled in the art to make or use the present invention. Various modifications to these embodiments will be readily apparent to those skilled in the art, and the generic principles defined herein may be applied to other embodiments without departing from the spirit or scope of the invention. Thus, the present invention is not intended to be limited to the embodiments shown herein but is to be accorded the widest scope consistent with the following claims and the principles and novel features disclosed herein.

While various aspects and embodiments have been disclosed, other aspects and embodiments are contemplated. The various aspects and embodiments disclosed are for purposes of illustration and are not intended to be limiting, with the true scope and spirit being indicated by the following claims.

The present teaching may also extend to the features of one or more of the following numbered clauses:
1. A computer-implemented method comprising:
   receiving, by the processor, an online merchant access request involving a blockchain wallet and a set of one or more merchant access rules;
   accessing, by a processor, a plurality of Non-fungible Tokens (NFTs) assigned to the blockchain wallet; and
   determining, by the processor, an access right for the blockchain wallet based on comparing the set of merchant access rules, the plurality of NFTs, and a plurality of transactions associated with the plurality of NFTs.
2. The method according to clause 1, further comprising querying, by the processor, the plurality of NFTs and the plurality of transactions associated with the plurality of NFTs.
3. The method according to clause 1, further comprising configuring, by the processor, a smart contract comprising machine-readable instructions for a node to store one or more NFTs assigned to the blockchain wallet responsive to the node receiving a notification of a restricted session between a customer device and an online merchant store.
4. The method according to clause 1, further comprising configuring, by the processor, a smart contract comprising machine-readable instructions for a node to store one or more NFTs assigned to the blockchain wallet according to one or more conditions of the smart contract.
5. The method according to clause 1, wherein determining the access right includes:
   identifying, by the processor, an NFT assigned to the blockchain wallet corresponding to the access right for content of a merchant website.
6. The method according to clause 1, wherein determining the access right includes:
   identifying, by the processor, one or more data values, inthe plurality of transactions associated with the plurality of NFTs, satisfying one or more access parameters in the set of one or more merchant access rules.
7. The method according to clause 1, wherein determining the access right includes:
   determining, by the processor, a priority status as the access right for the blockchain wallet based upon the plurality of transactions associated with the plurality of NFTs.
8. The method according to clause 1, further comprising transmitting, by the processor, a response to a merchant server indicating the access right for the blockchain wallet based upon comparing the set of merchant access rules, the plurality of NFTs, and the plurality of transactions associated with the plurality of NFTs.
9. The method according to clause 1, wherein a customer identifier is associated with each of the blockchain wallet, the plurality of NFTs, and the plurality of transactions associated with the plurality of NFTs, the method further comprising:
   receiving, by the processor, from a merchant server the customer identifier associated with the online merchant access request; and
   querying, by the processor, one or more machine-readable memories according to the customer identifier for the blockchain wallet, the plurality of NFTs, and the plurality of transactions associated with the plurality of NFTs.
10. The method according to clause 1, further comprising assigning, by the processor, to a second blockchain wallet an NFT of a subset of one or more NFTs associated with a transaction.
11. A system comprising:
   a computer comprising a processor configured to:
   receive an online merchant access request involving a blockchain wallet and a set of one or more merchant access rules;
   access a plurality of Non-fungible Tokens (NFTs) assigned to the blockchain wallet; and
   determine an access right for the blockchain wallet based on comparing the set of merchant access rules, the plurality of NFTs, and a plurality of transactions associated with the plurality of NFTs.
12. The system according to clause 11, wherein the processor is further configured to configure a smart contract comprising machine-readable instructions for a node to store one or more NFTs assigned to the blockchain wallet responsive to the node receiving a notification of a restricted session between a customer device and an online merchant store.
13. The system according to clause 11, wherein the processor is further configured to configure a smart contract comprising machine-readable instructions for a node to store one or more NFTs assigned to the blockchain wallet according to one or more conditions of the smart contract.
14. The system according to clause 11, wherein when determining the access right the processor is further configured to:
   identify an NFT assigned to the blockchain wallet corresponding to the access right for content of a merchant website.
15. The system according to clause 11, wherein when determining the access right includes the processor is further configured to:
   identify one or more data values, in the plurality of transactions associated with the plurality of NFTs, satisfying one or more access parameters in the set of one or more merchant access rules.
16. The system according to clause 11, wherein when determining the access right the processor is further configured to:
   determine a priority status as the access right for the blockchain wallet based upon the plurality of transactions associated with the plurality of NFTs.
17. The system according to clause 11, wherein the processor is further configured to transmit a response to a merchant server indicating the access right for the blockchain wallet based upon comparing the set of merchant access rules, the plurality of NFTs, and the plurality of transactions associated with the plurality of NFTs.
18. The system according to clause 11, wherein a customer identifier is associated with each of the blockchain wallet, the plurality of NFTs, and the plurality of transactions associated with the plurality of NFTs, and wherein the processor is further configured to:
   receive from a merchant server the customer identifier associated with the online merchant access request; and
   query one or more machine-readable memories according to the customer identifier for the blockchain wallet, the plurality of NFTs, and the plurality of transactions associated with the plurality of NFTs.
19. The system according to clause 11, wherein the processor is further configured to assign to a second blockchain wallet an NFT of a subset of one or more NFTs associated with a transaction.
20. A computer storage medium having machine-executable instructions stored thereon that, when executed by one or more processors, cause the one or more processors to:
   receive an online merchant access request involving a blockchain wallet and a set of one or more merchant access rules;
   access a plurality of Non-fungible Tokens (NFTs) assigned to the blockchain wallet; and
   determine an access right for the blockchain wallet based on comparing the set of merchant access rules, the plurality of NFTs, and a plurality of transactions associated with the plurality of NFTs.

## Claims

1. A computer-implemented method comprising:
receiving, by the processor, an online merchant access request involving a blockchain wallet and a set of one or more merchant access rules;
accessing, by a processor, a plurality of Non-fungible Tokens, NFTs, assigned to the blockchain wallet; and
determining, by the processor, an access right for the blockchain wallet based on comparing the set of merchant access rules, the plurality of NFTs, and a plurality of transactions associated with the plurality of NFTs.

2. The method according to claim 1, further comprising querying, by the processor, the plurality ofNFTs and the plurality of transactions associated with the plurality of NFTs.

3. The method according to claim 1 or 2, further comprising configuring, by the processor, a smart contract comprising machine-readable instructions for a node to store one or more NFTs assigned to the blockchain wallet responsive to the node receiving a notification of a restricted session between a customer device and an online merchant store.

4. The method according to any of the preceding claims, further comprising configuring, by the processor, a smart contract comprising machine-readable instructions for a node to store one or more NFTs assigned to the blockchain wallet according to one or more conditions of the smart contract.

5. The method according to any of the preceding claims, wherein determining the access right includes:
identifying, by the processor, an NFT assigned to the blockchain wallet corresponding to the access right for content of a merchant website.

6. The method according to any of the preceding claims, wherein determining the access right includes:
identifying, by the processor, one or more data values, in the plurality of transactions associated with the plurality of NFTs, satisfying one or more access parameters in the set of one or more merchant access rules.

7. The method according to any of the preceding claims, wherein determining the access right includes:
determining, by the processor, a priority status as the access right for the blockchain wallet based upon the plurality of transactions associated with the plurality of NFTs.

8. The method according to any of the preceding claims, further comprising transmitting, by the processor, a response to a merchant server indicating the access right for the blockchain wallet based upon comparing the set of merchant access rules, the plurality of NFTs, and the plurality of transactions associated with the plurality of NFTs.

9. The method according to any of the preceding claims, wherein a customer identifier is associated with each of the blockchain wallet, the plurality of NFTs, and the plurality of transactions associated with the plurality of NFTs, the method further comprising:
receiving, by the processor, from a merchant server the customer identifier associated with the online merchant access request; and
querying, by the processor, one or more machine-readable memories according to the customer identifier for the blockchain wallet, the plurality of NFTs, and the plurality of transactions associated with the plurality of NFTs.

10. The method according to any of the preceding claims, further comprising assigning, by the processor, to a second blockchain wallet an NFT of a subset of one or more NFTs associated with a transaction.

11. A system comprising:
a computer comprising a processor configured to carry out the method of any of the preceding claims.

12. A computer program which, when executed by one or more processors, is configured to cause the one or more processors to carry out steps according to the method of any of claims 1 to 10.

13. A computer storage medium having machine-executable instructions stored thereon that, when executed by one or more processors, cause the one or more processors to carry out steps according to the method of any of claims 1 to 10.
